(19) Europäisches Patentamt
European Patent Office
Office européen des brevets

(11) Numéro de publication : **0 419 615 B1**

(12) # FASCICULE DE BREVET EUROPEEN

(45) Date de publication du fascicule du brevet : **29.09.93 Bulletin 93/39**

(51) Int. Cl.$^5$ : **C08J 7/04,** C09D 151/08, G11B 5/71, // C08L67/02

(21) Numéro de dépôt : **90904851.4**

(22) Date de dépôt : **02.03.90**

(86) Numéro de dépôt international : **PCT/FR90/00146**

(87) Numéro de publication internationale : **WO 90/10666 20.09.90 Gazette 90/22**

(54) **FILMS POLYESTER COMPOSITES COMME SUPPORT DE REVETEMENTS FINALS.**

(30) Priorité : **08.03.89 FR 8903269**

(43) Date de publication de la demande : **03.04.91 Bulletin 91/14**

(45) Mention de la délivrance du brevet : **29.09.93 Bulletin 93/39**

(84) Etats contractants désignés : **BE DE ES FR GB IT LU NL**

(56) Documents cités :
**EP-A- 0 260 203**
**Base de Données WPIL, no 86-071843 (11), Derwent Publications Ltd, (Londres GB), & JP-A-61020740**

(73) Titulaire : **RHONE-POULENC FILMS**
**25, quai Paul Doumer**
**F-92408 Courbevoie (FR)**

(72) Inventeur : **FIARD, Jean-François**
**16, rue des Orteaux**
**F-75020 Paris (FR)**
Inventeur : **FLEURY, Etienne**
**135 bis, rue de Montagny**
**F-69008 Lyon (FR)**
Inventeur : **VOVELLE, Louis**
**85, grand-rue Croix-Rousse**
**F-69004 Lyon (FR)**

(74) Mandataire : **Vignally, Noel et al**
**Rhône-Poulenc Chimie Direction de la Propriété Industrielle Centre de Recherches des Carrières B.P. 62**
**F-69192 Saint-Fons Cédex (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet des films polyester composites à glissant amélioré destinés à servir de support à des revêtements finals d'application variés et notamment à des revêtement magnétiques.

En raison de leurs excellentes propriétés mécaniques et chimiques les films polyester consituent un matériau de choix comme support de revêtements filmogènes variés conduisant à des matériaux composites trouvant de nombreuses applications : emballages, pellicules photographiques, films ou feuilles pour arts graphiques, films métallisés, bandes magnétiques pour l'enregistrement de sons, d'images ou d'autres informations. Cependant, les films polyester manquent de glissant, ce qui occasionne des difficultés de mise en oeuvre et en particulier de bobinage, conséquence d'un coefficient de frottement élevé des films glissant sur eux-mêmes ou sur des surfaces métalliques lisses fixes ou en mouvement telles que celles présentes dans les appareils de fabrication des films (galets, cylindres), de transformation ou dans les appareils d'utilisation, en particulier ceux de reproduction de signaux enregistrés. Pour résoudre le problème posé par l'absence de glissant des films polyester, le moyen le plus utilisé consiste à leur communiquer une rugosité de surface par incorporation de particules inertes de sels ou d'oxydes métalliques qui génèrent des aspérités à la surface des films. Dans certains cas cette solution n'est pas toujours suffisante à elle seule pour communiquer aux films polyester le glissant souhaité et pour certains types d'applications elle s'avère néfaste pour les propriétés du revêtement final, en particulier lorsqu'il s'agit de revêtement magnétiques.

En effet, les irrégularités de surface du film support se traduisent par des irrégularités de surface du revêtement magnétique et même par une discontinuité de ce revêtement qui entraînent une perte d'information à l'enregistrement et/ou à la lecture de l'information. Par ailleurs, l'abrasion de ces aspérités lors des usages répétés des films magnétiques contribue également à leur détérioration.

Pour pallier ces différents inconvénients on a proposé de mettre en place sur les films polyester des revêtements destinés à améliorer leurs propriétés de glissant et par conséquent leur machinabilité et leur bobinabilité. On a en particulier décrit des revêtements glissants, à base de polymères filmogènes convenant tout particulièrement bien pour les films polyesters à faible rugosité utilisés comme supports de couches magnétiques. Ainsi, dans le brevet américain n° 4 233 352 on a proposé de mettre en place sur au moins une des faces d'un film polyester support un revêtement vermiculé destiné à en améliorer les propriétés de glissant, constitué par un polymère soluble dans l'eau (alcool polyvinylique, méthylcellulose, hydroxyéthylcellulose, carboxyéthylcellulose, gommes naturelles) et par un polysiloxane de poids moléculaire compris entre 30 000 et 300 000, comportant éventuellement des groupes fonctionnels (époxy, amino ou hydroxy) et/ou par un caoutchouc styrène-butadiène. Dans les demandes de brevets européens n° 74 750, 88 635 et 108 593 on a décrit des revêtements glissants analogues aux précédents mais contenant en outre des agents de couplage destinés à améliorer la liaison entre la surface du film polyester et le revêtement. Ces agents de couplage sont constitués par des silanes à groupes fonctionnels : d'une part des groupes méthoxy, éthoxy, OH silanolique et d'autre part des groupes vinyles, époxy, amino, mercaptans. Ces revêtements présentent un intérêt undustriel limité en raison de leur composition complexe due essentiellement à la mauvaise compatibilité des polymères solubles dans l'eau avec le film polyester très hydrophobe. Le problème se posait donc de trouver un revêtement conférant aux films polyester de bonnes propriétés de glissant et qui présentent une bonne compatibilité et par conséquent une bonne adhérence au polyester, sans recourir à des compositions complexes. La présente invention se propose de trouver une solution à ce problème.

Plus spécifiquement le présente invention a pour objet des films polyester composites à glissant amélioré constitué par un film polyester orienté dont l'une au moins des faces comporte un revêtement destiné à lui conférer un bon glissant caractérisé en ce que ledit revêtement est constitué par au moins un polymère modifié consistant en un polyester greffé comprenant :

a) un tronc dérivé d'un polyester dissipable dans l'eau comportant une pluralité de groupe sulfonyloxy de formule générale :

$$(-SO_3-)_nM \qquad (I)$$

dans laquelle :

- . n est égal à 1 ou 2
- . M représente un atome d'hydrogène, un métal alcalin ou alcalino-terreux, un cation ammonium, un cation ammonium quaternaire ;

b) des greffons constitués de motifs copolymères dérivés d'au moins un monomère à insaturation éthylénique et d'au moins un organopolysiloxane éthyléniquement insaturé soluble dans ledit ou lesdits monomère(s) à insaturation éthylénique.

Par "polyesters dissipables dans l'eau" on désigne aux fins de la présente invention, des polyesters solubles dans l'eau ou des polyesters formant dans l'eau des dispersions stables.

Les polyesters à groupes sulfonyloxy dissipables dans l'eau, sont des produits connus, décrits notamment

dans les brevets français n° 1.401.581 et 1.602.002 et la demande de brevet européen n° 0 129 674 ; aux fins de la présente invention, on peut avoir recours aux polyesters à groupes sulfonyloxy décrits dans ces brevets. Plus spécifiquement, les polyesters dissipables dans l'eau sont obtenus par polycondensation d'un ou plusieurs acides dicarboxyliques avec au moins un ou plusieurs diols aliphatiques et au moins un composé difonctionnel comportant au moins un groupe sulfonyloxy ; par la suite, pour la commodité de l'exposé, l'expression "groupe sulfonyloxy" désignera aussi bien les groupes hydroxysulfonyles que les sels alcalins, alcalino-terreux ou d'ammonium qui en dérivent.

Parmi les acides dicarboxyliques utilisables pour préparer les polyesters dissipables dans l'eau, on peut citer, à titre d'exemples non limitatifs : des acides aromatiques comme les acides téréphtalique, isophtalique, phtalique, napthtalènedicarboxylique-1,4, oxydibenzoïque-4,4', la bis(hydroxycarbonyl-4 phényl)sulfone, la dihydroxycarbonyl-4,4' benzophénone ; des acides aliphatiques comportant de 3 à 15 atomes de carbone tels que les acides adipique, subérique, sébacique, succinamique, dodécanedioïque peuvent être utilisés seuls ou en mélanges. Parmi les acides précités, on fait appel, de préférence, aux acides téréphtalique et isophtalique seuls ou en combinaison avec les autres acides cités. Les mélanges d'acide téréphtalique avec un ou plusieurs autres acides dicarboxyliques aromatiques et/ou aliphatiques et, en particulier, avec l'acide isophtalique conviennent tout particulièrement bien à l'obtention des polyesters sulfonés dissipables dans l'eau. Dans ce cas, la quantité d'acide téréphtalique exprimée en moles peut varier entre 20 et 99 % du nombre total de moles de diacides non sulfonés et de préférence entre 30 et 95 %.

Pour la préparation des polyesters sulfonés dissipables dans l'eau, les acides dicarboxyliques peuvent être remplacés, lors de la polycondensation, par leurs dérivés utilisés habituellement dans ce type de réaction : anhydrides, esters ou chlorures d'acides. On fait appel de préférence aux esters et en particulier aux esters méthyliques.

Comme exemple de diols utilisables pour la préparation des polyesters sulfonés dissipables dans l'eau, on peut citer l'éthylèneglycol ; le butanediol-1,2 ; le diméthyl-2,2 propanediol-1,3 ; le pentanediol-1,5 ; l'hexanediol-1,6 ; le diéthylèneglycol ; le triéthylèneglycol ; le néopentylglycol ; le cyclohexanediméthanol ; le tétraéthylèneglycol ; les penta-, hexa- ou décaméthylèneglycol. L'éthylèneglycol et ses oligomères conviennent tout particulièrement bien à la préparation des polyesters sulfonés. On peut les utiliser seuls ou en mélange entre eux et/ou avec d'autres diols. Les mélanges d'éthylèneglycol et de ses oligomères de formule $HO-(CH_2-CH_2-0-)_nH$ dans laquelle n est un nombre entier compris entre 2 et 10 sont préférés.

Les groupes sulfonyloxy de formule $-SO_3M$ peuvent être introduits dans le polyester par l'intermédiaire d'un composé difonctionnel, à groupe sulfonyloxy, susceptible de réagir avec les diacides et/ou les diols au cours de la polycondensation. Des exemples de tels monomères sont cités dans le brevet français n° 1.602.002. On fait appel, de préférence, aux sels de métaux alcalins d'acides aromatiques dicarboxyliques à groupes sulfonyloxy tels que ceux des acides sulfoisophtalique, sulfophtalique, hydroxysulfonyl-4, naphtalènedicarboxylique-2,7 ou à leurs dérivés et, en particulier, à leurs esters. De préférence le polyester dissipable est un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique. La quantité de composé bifonctionnel à groupe sulfonyloxy présente dans le polyester sulfoné, exprimée en moles pour un total de 100 moles de composé difonctionnel de même nature, est de préférence comprise entre 2 moles et 30 moles %. De préférence le nombre de motifs dérivés d'un acide dicarboxylique à groupe sulfonyloxy pour un total de 100 motifs dérivés d'acides dicarboxyliques est de 2 à 30. En général, des quantités de composé difonctionnel sulfoné comprises entre 4 moles et 20 moles pour un total de 100 moles de composé difonctionnel de même nature conviennent bien. De préférence le polyester dissipable dans l'eau comporte une pluralité de motifs dérivés de l'acide sulfo-5 isophtalique. Ainsi, lorsqu'on fait appel à un sel alcalin de l'acide hydroxysulfonyl-5 isophtalique, ce composé peut représenter de 4 moles à 30 moles pour un total de 100 moles de motifs acides dicarboxyliques présents dans le polyester.

Les polyesters dissipables dans l'eau décrits précédemment sont obtenus par les procédés usuels, par exemple par réaction du ou des diols avec un mélange des esters méthyliques des différents acides nécessaires, en présence des catalyseurs usuels de transestérification, puis polycondensation des esters de diols ainsi obtenus. Les quantités de chacun des réactifs sont calculées pour que le rapport du nombre total de groupes hydroxyles alcooliques au nombre total de groupes carboxyliques soit de préférence compris entre 2 et 2,5.

Les polyesters dissipables dans l'eau préférés sont ceux qui présentent une masse moléculaire moyenne en nombre comprise entre 10 000 et 35 000, un indice d'acide inférieur à 5 mg de potasse par gramme, un taux de soufre compris entre 0,8 et 2 % en poids et, de préférence entre 1,2 et 1,8 %.

Parmi les monomères à insaturation éthyléniques dont peuvent dériver les greffons on peut citer :

a) des monomères acryliques, de préférence de formule générale :

$$\begin{array}{c} R \\ | \\ CH_2{=}C{-}Y \end{array} \qquad (II)$$

dans laquelle :

- R représente un atome d'hydrogène ou un groupe alkyle inférieur, éventuellement substitué par un groupe hydroxyle ;
- Y représente un groupe fonctionnel hydroxycarbonyle ; alkoxycarbonyle de formule $-COOR_1$ dans lequel $R_1$ est un radical alkyle comportant de 1 à 20 atomes de carbone, linéaire ou ramifié (éventuellement substitué par un reste hydroxyle); nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone.

Par radical alkyle inférieur, on désigne des radicaux alkyles comportant de 1 à 4 atomes de carbone.

Comme exemples spécifiques de radicaux $R_1$, $R_2$ et $R_3$, on peut citer les radicaux méthyle, éthyle, n-propyle, isopropyle, n-butyle, isobutyle, tertiobutyle, n-pentyle, n-hexyle, éthyl-2 hexyle, décyles, dodécyles, octadécyles. Comme exemple de radicaux hydroxyalkyles $R_1$, on peut citer les radicaux hydroxyméthyle, hydroxy-2 éthyle, hydroxy-3 propyle, hydroxy-4 butyle.

Dans la formule (II), R représente de préférence un atome d'hydrogène ou des radicaux méthyle ou hydroxyméthyle.

Parmi les dérivés acryliques de formule (II) auxquels on peut faire appel pour la préparation des polymères modifiés, on peut citer à titre non limitatif : l'acide acrylique, l'acide méthacrylique, l'acrylonitrile, le méthacrylonitrile, l'acrylamide, la méthacrylamide, la N-méthylacrylamide, les acrylates et méthacrylates de méthyle, d'éthyle, de n-propyle, d'isopropyle, de n-butyle, d'isobutyle, d'éthyl-2 hexyle, de stéaryle. Ces monomères peuvent être utilisés seuls ou en mélanges de deux ou plus de deux dérivés acryliques. Comme exemple d'association de dérivés acryliques, on peut citer les mélanges : méthacrylate de méthyle/acide acrylique et/ou méthacrylique, méthacrylate de méthyle/acide acrylique ou méthacrylique/acrylate d'éthyle ; méthacrylate de méthyle/acrylate d'éthyle/acrylamide ou méthacrylamide ; acrylamide/méthacrylamide ; acrylate de butyle/acide acrylique ; méthacrylate de butyle/acrylate d'éthyle.

b) des monomères vinyliques tels que les esters vinyliques ou allyliques d'acides carboxyliques aliphatiques ou aromatiques :

l'acétate de vinyle, le propionate de vinyle, les butyrate, stéarate, benzoate de vinyle ; les composés vinylaromatiques : styrène, vinyltoluène ; les halogénures éthyléniques : chlorure de vinyle, le chlorure et le fluorure de vinylidène ; des acides carboxyliques éthyléniques : acides itaconique, maléique ; des acides sulfoniques ethylèniques : acides vinylsulfonique, allylsulfonique, méthallylsulfonique, styrénesulfonique.

De préférence on fait appel à des polymères modifiés dans lesquels les greffons résultent de monomères acryliques de formule (II) auxquels on peut associer une quantité mineure d'un ou plusieurs monomères non acryliques tels que ceux précités. Dans ce cas la quantité de monomère éthylènique non acrylique est calculée de façon à ce que dans le copolymère obtenu le nombre de motifs récurrents de ce monomère non acrylique exprimé en moles pour 100 moles de monomère acrylique soit de préférence inférieur ou égal à 20 % et plus préférentiellement encore à 10 %. Des quantités de motifs éthyléniques représentant de 0,1 à 5 % en moles conviennent bien.

On peut, sans sortir du cadre de la présente invention, associer à ces monomères un ou plusieurs monomères susceptibles de provoquer une réticulation des monomères à insaturation éthylénique. A cet effet, on peut faire appel à des monomères polyéthyléniques susceptibles de se réticuler sous l'action des générateurs de radicaux libres au cours de la polymérisation ou bien à des monomères provoquant une réticulation de la partie acrylique par chauffage, par exemple lors du processus d'obtention du film revêtu ou lors d'un traitement thermique ultérieur du film revêtu. Comme exemple, de monomères polyéthyléniques, on peut citer le phtalate de diallyle, le divinylbenzène, les diacrylates ou diméthacrylates de diols tels que le diméthacrylate d'éthylèneglycol. Conviennent comme réticulants sous l'effet de la chaleur des hydroxyalkyl(méth)acrylamides telles que la N-méthylolacrylamide et la N-méthylolméthacrylamide.

La quantité de monomère réticulant exprimée comme précédemment est de préférence inférieure à 5 moles pour 100 moles de monomère à insaturation éthylénique. En général, elle est comprise entre 0,1 et 3 moles %.

Les organopolysiloxanes éthyléniquement insaturés dont dérivent les motifs copolymères constituant les greffons peuvent être représentés par la formule moyenne suivante :

$$R''R'RSiO\ (SiRR'''O)_m\ (SiRR''''O)_n\ SiRR'R''$$

formule dans laquelle :

. les symboles R sont identiques ou différents et représentent un radical alkyle en $C_1$-$C_4$, phényle, trifluoro-3, 3, 3 propyle ;

. les symboles R' sont identiques ou différents et représentent R ou un radical vinyle ;

. les symboles R" sont identiques ou différents et représentent R ou un radical OH ;

. les symboles R'" sont identiques ou différents et représentent R, un radical vinyle ou un motif -r-X où r représente un radical organique bivalent et X un groupe éthyléniquement insaturé ;

. les symboles R"" sont identiques ou différents et représentent R'" ou un motif -r'-X' où r' représente un radical organique bivalent et X' un groupe fonctionnel non éthyléniquement insaturé ;

. au moins 60 % des radicaux représentés par R, R' et R" sont des radicaux méthyles ;

. les symboles m et n peuvent être nuls séparément, R' et/ou R"" représentant un radical vinyle si m est nul, et ont une valeur suffisante pour assurer au polymère une viscosité de l'ordre de 20 mPas à 10.000.000 mPas à 25°C, de préférence de l'ordre de 50 à 7.000.000 mPas.

Comme exemple de motifs diorganosiloxy dans lesquels R'" et R"" représentent R ou un radical vinyle, on peut citer les motifs :

$(CH_3)_2SiO$ ; $CH_3(CH_2{=}CH)SiO$ ; $CH_3(C_2H_5)SiO$ ; $CH_3(C_6H_5)SiO$ ; $(C_6H_5)_2SiO$ ; $CF_3CH_2CH_2(CH_3)SiO$.

Parmi les motifs triorganosiloxy bloqueurs, on peut citer ceux de formule suivante : $(CH_3)_3SiO_{0,5}$ ; $(CH_3)_2CH_2{=}CHSiO_{0,5}$; $(CH_3)_2C_6H_5SiO_{0,5}$ ; $CH_3(C_6H_5)_2SiO_{0,5}$ ; $CH_3(CH_2{=}CH)C_6H_5SiO_{0,5}$ ; $CH_2{=}CH(C_6H_5)SiO_{0,5}$ ; $(C_6H_5)_3SiO_{0,5}$.

Parmi les radicaux organiques divalents r et r' pouvant entrer dans la constitution des symboles R'" et R "", on peut citer : les radicaux alkylènes linéaires ou ramifiés en $C_1$-$C_{18}$, éventuellement prolongés par 1 à 5 groupes bivalents éthylène amine, par 1 à 50 groupes oxyde d'alkylène en $C_1$-$C_3$, ou par un groupe $-O-CH_2-CH-CH_2-$ ; les radicaux

OH

polyoxyalkylènes contenant de 1 à 50 chaînons oxyalkylène en $C_1$-$C_3$.

A titre d'exemple de radicaux bivalents, on peut citer :

$-CH_2-$ ; $-(CH_2)_2-$ ; $-(CH_2)_3-$ ;

$-CH_2-CH-CH_2-$ ;
CH3

$-(CH_2)_{10}-$ ; $-(CH_2)_{12}-$ ; $-(CH_2)_3NH-CH_2-CH_2-$ ; $-(CH_2)_3-OCH_2-$ ; $-(CH_2)_3-(OCH_2-CH_2)_{29}-$ ; $-(CH_2)_3-[O-CH_2-CH(CH_3)-]_{15}$ ;

$-(CH_2)_3OCH_2-CH-CH_2-$
OH

Parmi les groupes éthyléniquement insaturés X, on peut citer notamment les radicaux acrylyloxy et méthacrylyloxy.

Parmi les groupes fonctionnels X' on peut citer les groupements epoxy, hydroxy, carboxy, aldehyde, ester, acetoester, amino.

Parmi les organopolysiloxanes éthyléniquement insaturés préférentiels, on peut citer ceux à fonctions acrylate ou méthacrylate tel que ceux décrits dans la demande de brevet européen publiée sous le n° 281.718, les brevets américains n° 4.293.678 ; 4.139.548 ; 4.558.082 ; 4.663.185 ; 4.640.967.

De préférence les quantités respectives de tronc et de greffons entrant dans la composition des polymères modifiés correspondent à :

- 2 à 60 % en poids, de préférence 10 à 50 % en poids par rapport au polymère modifié, de polyester sulfoné dissipable :
- de 0,05 à 30 % en poids, de préférence 5 à 25 % en poids par rapport au polymère modifié, d'organopolysiloxane éthyléniquement insaturé ;
- et complément à 100 %, de motifs dérivés de monomère(s) éthyléniquement insaturé.

Les quantités relatives des différents motifs du tronc et des greffons sont fonction des propriétés désirées dudit polymère modifié: température de transition vitreuse, dureté, hydrophilie, par exemple.

Si des produits hydrodispersables à pH alcalin sont désirés il sera préférable d'avoir des motifs dérivés d'une composition monomère vinylique contenant plus de 5 % de son poids, et généralement de l'ordre de 7

à 11 % de son poids d'acide carboxylique éthyléniquement insaturé, et une quantité de motifs organopolysiloxanes inférieurs à 30 % du poids total du polymère modifié.

Les polymères modifiés peuvent être préparés par :

- préémulsion dans l'eau d'une solution d'organopolysiloxane dans le ou les monomère(s) vinylique(s)
- puis addition de l'émulsion obtenue à une solution ou à une dispersion aqueuse de polyester sulfoné et polymérisation en présence d'un amorceur hydrosoluble ou hydrodispersable.

Les quantités de réactifs mises en oeuvre correspondent à :

- 2 à 60% en poids, de préférence 10 à 50 % en poids par rapport au poids total de monomères et de polymères mis en oeuvre, de polyester sulfoné.
- 0,05 à 30 % en poids, de préférence 0,5 à 10 % en poids par rapport au poids total de monomères et de polymères mis en oeuvre, d'organopolysiloxane éthyléniquement insaturé
- avec complément à 100 % à l'aide de monomère(s) éthyléniquement insaturé(s)
- 0,01 à 4 %, de préférence de 0,05 à 2 % en poids par rapport au poids total de monomères et de polymères mis en oeuvre, d'amorceur hydrosoluble ou hydrodispersable.

L'étape de préémulsion dans l'eau de la solution d'organopolysiloxane dans le(s) monomère(s) vinylique(s) peut être réalisée avec un rapport pondéral monomère(s) vinylique(s) + organopolysiloxane / eau de l'ordre de 1/5 à 5/1, généralement de l'ordre de 1/3 à 3/1.

Les agents émulsifiants pouvant être mis en oeuvre sont des agents anioniques classiques représentés notamment par les sels d'acides gras, les alkylsulfates, les alkylsulfonates, les alkylarylsulfonates, les sulfosuccinates, les alkylphosphates de métaux alcalins, les sels de l'acide abiétique hydrogénés ou non, des agents non-ioniques tels que les alcools gras polyéthoxylés, les alkylphénols polyéthoxylés, les alkylphénols polyethoxylés sulfatés, les acides gras polyéthoxylés.

Ils peuvent être utilisés à raison de 0,1 à 3 % en poids par rapport au poids total de monomère(s) vinylique(s), d'organopolysiloxane et de polyester sulfoné (c'est-à-dire de monomère(s) vinylique(s) et de polymères).

Une variante de l'étape de préémulsion consiste à réaliser cette étape en présence d'un amorceur organosoluble. A titre d'exemple, on peut citer les peroxydes organiques comme le péroxyde de lauroyle, de benzoyle, de tert-butyle ; les azonitriles comme l'azobis-isobutyronitrile.

Une autre variante de réalisation de l'étape de préémulsion consiste à mettre en oeuvre à cette étape une fraction du polyester sulfoné hydrodispersable, par exemple jusqu'à 50 % en poids du poids total de polyester sulfoné.

L'étape de préémulsion est favorablement réalisé par homogénéisation.

L'étape de polymérisation après addition de l'émulsion à une solution ou une dispersion aqueuse de polyester sulfoné est réalisée en présence d'un amorceur hydrosoluble ou hydrodispersable comme par exemple les hydropéroxydes tels que de l'eau oxygénée, l'hydropéroxyde de cumène, l'hydropéroxyde de tertiobutyle, l'hydropéroxyde de diisopropylbenzène et les persulfates tels que le persulfate de sodium, le persulfate de potassium, le persulfate d'ammonium.

Ces amorceurs sont éventuellement associés à un réducteur, tel que les bisulfite ou le formaldehydesulfoxylate de sodium, les polyéthylèneamines, les sucres : dextrose, saccharose, les sels métalliques. Les quantités de réducteur utilisées varient de 0 à 3 % en poids par rapport au poids de la composition monomère(s) + polymères.

Des agents limitateurs de chaine peuvent éventuellement être présents dans des proportions allant de 0 à 3 % en poids par rapport à la composition monomère + polymères. Ils sont généralement choisis parmi les mercaptans tels que le N-dodécylmercaptan, le tertiododécyl mercaptan ; le cyclohexène ; les hydrocarbures halogénés tels que le chloroforme, le bromoforme, le tetrachlorure de carbone, le tétrabromure de carbone ; les dimères de l'$\alpha$-méthylstyrène.

Si nécessaire une quantité supplémentaire d'agents émulsifiants peuvent être mise en oeuvre.

L'opération de polymérisation est réalisée à une température fonction de celle de décomposition de l'amorceur ; cette opération se déroule généralement à une température de l'ordre de 60 à 80°C, de préférence de l'ordre de 75°C.

Si désiré le latex obtenu, qui renferme généralement de l'ordre de 10 à 40 % du poids de polymère modifié, peut être atomisé pour être stocké et véhiculé plus facilement.

La concentration du polyester dissipable et des composés monomère(s) polymérisable(s) dans la phase aqueuse de polymérisation n'est pas critique et peut varier dans de larges limites. Cette concentration est choisie en fonction du taux de matières solides désiré pour l'émulsion finale et du taux de polymérisation des composés monomère(s) dans les conditions de polymérisation.

Le produit aqueux obtenu après polymérisation peut être utilisé directement pour la mise en oeuvre du procédé selon l'invention. Il peut également faire l'objet de traitements divers. Ainsi, on peut à la fin de la polymérisation procéder à l'élimination des monomères non transformés par les moyens usuels. Lorsque l'un ou plusieurs des composants de la réaction comporte des fonctions acides libres, ces dernières peuvent être neutralisées par addition d'une base minérale ou organique ; on fait appel de préférence à une base alcaline (soude, potasse), à un hydroxyde d'ammonium quaternaire ou à l'ammoniaque. Il peut s'agir des fonctions acide sulfonique du polyester dissipable et/ou des fonctions acide carboxylique des monomères insaturés. On peut encore ajouter à l'émulsion obtenue des adjuvants tels des stabilisants, ou des agents antistatiques. Selon une variante, on peut encore introduire dans l'émulsion obtenue des agents de réticulation externes. Parmi les agents réticulants préférés, on peut citer, les résines formophénoliques, les résines amines-formol telles que les produits de condensation mélamine/formol, urée/formol, triazine/formol. La quantité de réticulant est alors en général comprise entre 0,1 et 15 % en poids et de préférence entre 0,5 et 12 % en poids par rapport au poids total du polyester modifié.

Le produit résultant de la polymérisation présente diverses formes, selon la proportion et la nature des réactifs mis en jeu et/ou les conditions de la polymérisation, et/ou le traitement final appliqué au produit obtenu. Ainsi, les produits résultant de la polymérisation d'un monomère acrylique non acide avec une quantité notable d'un acide polymérisable (acides (meth) acryliques, acide crotonique), par exemple au moins 5 % en moles du total des monomères polymérisables peut se présenter sous forme d'une émulsion vraie lorsque les groupes acides carboxyliques sont libres ou sous forme de solutions aqueuses plus ou moins visqueuses lorsque les groupes carboxyliques sont neutralisés au moyen d'une des bases citées auparavant et en particulier au moyen d'une base alcaline. La viscosité des dispersions ou solutions de polymères modifiés n'est pas critique et peut être réglée à volonté en fonction des besoins par modification de leur teneur en extrait sec.

Les films orientés utilisés comme support du revêtement en polymère modifié dans les films composites selon la présente invention peuvent être constitués par des polyesters résultant de la polycondensation d'un ou plusieurs acides aromatiques dicarboxyliques (ou leurs dérivés) tels que les acides téréphtalique, isophtalique, naptalènedicarboxylique-2,6 avec un ou plusieurs alkylène-glycols (éthylèneglycol ; propylèneglycol-1,3 ; butanediol-1,4). Des quantités mineures d'acides dicarboxyliques aliphatiques (acide adipique par exemple) ou d'acides cyclohexane dicarboxyliques ou de diols tels que les di ou trioxyalkylèneglycol, les diols aliphatiques ramifiés (néopentylglycol), le cyclohexanediméthanol-1,4, peuvent être associés aux diacides et diols de base. En général, ces composés ne représentent pas plus de 20 % en moles de ces derniers. On fait appel de préférence à des polyesters comportant au moins 80 % en moles de motifs dérivés d'au moins un acide dicarboxylique aromatique et d'éthylèneglycol et, plus préferentiellement, au moins 80 % en moles de motifs téréphtalate ou naphtalènedicarboxylates d'éthylèneglycol. Comme exemples de polyesters qui sont utilisés préférentiellement comme supports, on peut citer le polytéréphtalate d'éthylèneglycol ; le polytéréphtalate de butanediol-1,4 ; le polynaphtalènedicarboxylate-2,6 d'éthylèneglycol.

Les films polyester orientés supports sont obtenus de façon classique par extrusion d'une nappe de polyester amorphe, refroidissement de cette nappe, étirages dans une ou deux directions perpendiculaires, thermofixation et le cas échéant, traitements destinés à l'obtention de films équilibrés ou "surétirés".

Ils peuvent présenter sur l'une et/ou l'autre face une rugosité de surface générée au moyen de particules solides minérales présente dans le polycondensat et qui résultent soit de la précipitation, de façon connue en soi, de résidus catalytiques, soit de l'incorporation au polyester des charges minérales connues telles que les oxydes métalliques (alumine, silice, oxyde de titane), les alumino-silicates (Kaolin) les sels métalliques ($BaSO_4$ ; $CaCO_3$) our leurs mélanges. La granulométrie de ces charges est celle généralement mise en oeuvre dans le domaine des films polyester et dépend de l'usage final auquel le film est destiné.

Les films polyester orientés support peuvent être eux mêmes simples ou composites. Ainsi on ne sortirait pas du cadre de la présente invention en utilisant comme film polyester support un film polyester composite obtenu par coextrusion de deux ou trois nappes de polymère différent par la nature du polyester les constituant et/ou par la présence ou non de charges, et/ou par la nature des charges, et/ou par la granulométrie des charges, et/ou par la teneur en charge. Par exemple, le film support peut être constitué par une couche d'un polyester non chargé et par une couche d'un polyester chargé.

L'épaisseur des films polyester support utilisés pour l'obtention des films polyester composites selon l'invention peut être comprise entre 5 et 300 μm.

Bien que le revêtement de polymère modifié conforme à l'invention puisse être appliqué, ainsi qu'il a été exposé ci-avant, sur tout type de films polyester supports, il est utilisé avantageusement pour conférer de bonnes propriétés de glissant à des films polyester présentant une faible rugosité de surface. En particulier le revêtement de polymère modifié convient tout particulièrement bien pour améliorer le glissant de films polyester présentant une épaisseur de 5 à 30 μm et une rugosité Ra ou CLA (écart moyen arithmétique), mesurée selon la norme DIN N° 4768 dans des conditions précisées ultérieurement, inférieure à 0,05 μm et de préférence inférieure à 0,01 μm. De tels films polyester sont recherchés pour la fabrication de matériaux (films, bandes, disques) magnétiques et en particulier de matériaux d'enregistrement magnétique à haute densité d'informations. Pour ce type d'application il convient de disposer d'un film présentant à la fois aussi peu d'aspérités de surface que possible, c'est-à-dire pratiquement exempt de charges, et un pouvoir glissant aussi élevé que possible du film sur lui-même ou sur des surfaces métalliques fixes ou en mouvement. Le recours aux revêtements de polymères modifiés conformes à la présente invention permet de concilier ces deux exigences contradictoires.

La présente invention a donc comme second objet l'utilisation des films composites conformes à l'invention et dont le film polyester orienté support présente préferablement une rugosité Ra inférieure ou égale à 0,05 µm pour la fabrication de matériaux d'enregistrement magnétique, notamment ceux à haute densité d'information dont le revêtement magnétique est formé par évaporation d'oxydes ou d'alliages métalliques ou par revêtement cathodique (sputtering).

Enfin la présente invention a pour troisième objet les matériaux d'enregistrement magnétique à bon pouvoir glissant constitué par un film support comportant sur au moins une de ses faces un revêtement glissant et un revêtement magnétique où le film support est un film polyester composite selon l'invention, notamment ceux à haute densité d'information dont le revêtement magnétique est formé par évaporation d'oxydes ou d'alliages métalliques ou par revêtement cathodique (sputtering) dont le support est constitué par les films polyester composites à revêtement glissant décrits ci-avant.

Le dépôt du revêtement sur le film polyester peut être réalisé par les différentes techniques connues de l'homme de l'art. De préférence on procède à l'enduction d'au moins une face d'un film polyester orienté support au moyen d'une composition aqueuse d'un polymère modifié comme décrit ci-dessus. Par exemple le polymère modifié est mis en oeuvre sous forme d'une dispersion aqueuse ou sous forme d'une solution aqueuse obtenue par neutralisation à l'aide d'une base alcaline des groupes acides carboxyliques libres présents dans le polymère modifié de la dispersion aqueuse. Ainsi, l'émulsion ou la solution aqueuse de polymère modifié peut être déposée par gravité à partir d'une couleuse à fente, ou par passage du film dans l'émulsion ou la solution ou encore au moyen de rouleaux de transfert. L'épaisseur de la couche est contrôlée par tout moyen approprié. Le dépôt du revêtement peut avoir lieu soit avant tout étirage du film (enduction en ligne), soit après étirage avant ou après thermofixation (enduction en reprise). On préfère toutefois procéder à l'enduction du film polyester avant l'étirage ou entre deux étirages.

Préalablement à l'enduction, le film polyester peut être soumis à un traitement de surface choisi parmi ceux habituellement utilisés et, plus particulièrement, parmi les traitements physiques. Ainsi, la face destinée à recevoir le revêtement peut être soumise à des décharges électriques (traitement corona) ou à des radiations ionisantes. Cependant, de tels traitements ne sont pas indispensables.

La quantité de composition aqueuse d'enduction déposée sur le film dépend d'une part de sa teneur en extrait sec et, d'autre part, de l'épaisseur désirée pour le revêtement du film fini, c'est-à-dire après étirage et thermofixation lorsque l'enduction a lieu en ligne. Cette quantité dépend également du moment de l'enduction ; on doit évidemment tenir compte de la variation d'épaisseur du revêtement avant et après étirage, lorsque l'enduction est réalisée avant étirage. L'épaisseur du revêtement fini peut varier dans de larges limites.

En général l'épaisseur du revêtement de polymère modifié est supérieure ou égale à 0,05 µm et inférieure à 0,01 µm, de préférence à 0,7 µm. De préférence, elle est comprise dans un intervalle de 0,1 à 0,5 µm.

Après enduction, le film polyester est traité à chaud pour éliminer l'eau contenue dans le revêtement et, le cas échéant, pour provoquer la réticulation du polymère. Dans le cas de l'enduction en ligne, il n'est en général pas nécessaire de procéder à un traitement thermique ; le séchage et éventuellement la réticulation sont réalisés au cours de l'étirage et de la thermofixation. On ne sortirait cependant pas du cadre de la présente invention en procédant, dans ce cas, préalablement à l'étirage et à la thermofixation, à un traitement thermique suffisant pour provoquer la coalescence du latex et le séchage.

Le revêtement de polymère modifié peut être appliqué sur une seule des faces ou sur les deux faces du film polyester support. Dans ce dernier cas, le revêtement situé sur la face destinée à recevoir le revêtement final et, en particulier, le revêtement magnétique, contribue à en améliorer l'adhérence au support.

L'obtention des films d'enregistrement magnétique conformes à l'invention est réalisée par dépôt sur une face des films polyester composites, selon les procédés connus, d'une substance magnétique. Bien que l'on puisse faire appel à l'enduction par un enduit magnétique constitué par une substance ferro-magnétique telle que les oxydes de fer, de nickel, de cobalt, de chrome ou leurs mélanges dispersés dans un liant polymère, les films polyester conformes à l'invention conviennent tout particulièrement bien à l'obtention de films à haute densité d'informations par dépôt d'un revêtement magnétique mince par les techniques d'évaporation de métal, ou de métallisation ionique. Préalablement au dépôt du revêtement magnétique, le film polyester composite peut être soumis à divers traitements pour améliorer ses propriétés. Ainsi, il peut subir un traitement corona pour augmenter ses propriétés d'adhésion au revêtement magnétique. Dans le même but, il est encore possible de lui appliquer une couche d'un primaire d'adhérence. A cet effet, on peut faire appel aux nombreuses compositions décrites dans la littérature et bien connues de l'homme de l'art. Il s'avère toutefois avantageux de faire

appel aux solutions ou dispersions aqueuses de polyesters sulfonés modifiés par des monomères acryliques décrites dans la demande de brevet européen 0 260 203.

Les exemples suivants illustrent l'invention et montrent comment elle peut être mise en pratique. Dans ces exemples, les propriétés des films supports et/ou des films composites auxquelles on se réfère sont les suivantes :

1°) Rugosités

a) Ecart moyen arithmétique : rugosité Ra (ou CLA)

Cette caractéristique définie dans la norme DIN 4.768 a été mesurée sur un appareil PERTHEN S6P conformément à la méthode décrite dans cette norme, dans les conditions suivantes :

- valeur de la longueur d'onde de coupure (cut-off) : 0,08 mm,
- longueur de palpage : 1,75 mm,
- rayon de courbure du palpeur : 5 μm
- force d'appui du palpeur : 50 mg.f

Le résultat retenu est la moyenne de 30 mesures effectuées sur des profils distants de 20 μm.

b) Hauteur maximale des pics de surface : HM

La hauteur maximale des pics de surface a été déterminée par interférométrie selon NOMARSKI, en lumière blanche. A cet effet on a utilisé un microscope NACHET NS 400 équipé d'un interféromètre NOMARSKI, et d'un objectif ayant un grossissement de 80.

c) Rugosité tridimentionnelle optique SRa.

La rugosité SRa représente l'écart moyen arithmétique de la rugosité de surface par rapport au plan moyen exprimée en μm (il s'agit de l'extention de la rugosité Ra à une surface).

La rugosité SRa a été déterminée au moyen d'un appareil de marque SURFCORDER ET-30 HK équipé de l'unité de traitement SPA 11 de la Société KOSAKA Laboratories Ltd et d'un capteur de type optique de marque HIPOSS, dans les conditions suivantes :

- longueur d'onde de coupure (Cut-Off) - 0,08 mm
- grandissement : x 20 000
- vitesse de palpage : 20 μm/s
- longueur de palpage : 0,25 mm avec un pas d'échantillonnage de 0,5 μm
- nombre de profils : 150 avec un pas entre profils de 0,5 μm.
- surface testée : 0,25 mm x 0,075 mm
- gain : 1
- hystérésis : 1

2°) Coefficients de friction

Coefficients de friction statique (μs) et dynamique (μd) film/métal

Ils ont été déterminés selon la méthode dite "SHOE-SHINE" décrite dans la demande de brevet japonais J 63 28627 en utilisant un appareil analogue à celui décrit dans ladite demande avec les conditions suivantes :

- diamètre du galet.............. 6 mm
- largeur de bande............... 1,27 cm
- vitesse de défilement.......... 0,9 m/mn
- tension........................ 50 g
- durée.......................... 15 min
- température.................... 25°C
- humidité relative.............. 35 %
- aire de contact................ 1,27 x 0,7 cm2

La fréquence de sollicitation en cisaillement est de l'ordre de 1 Hz.

EXEMPLE

1°) Préparation d'un latex de polyester sulfoné gréffé.

a) Préémulsion

Dans un becher de 1 l on charge :

- 100,8 g de méthacrylate de méthyle
- 38,4 g d'acrylate de butyle
- et 4,8 g d'acide méthacrylique

On ajoute sous agitation :

- 48 g d'une huile organopolysiloxane insaturée de formule moyenne :

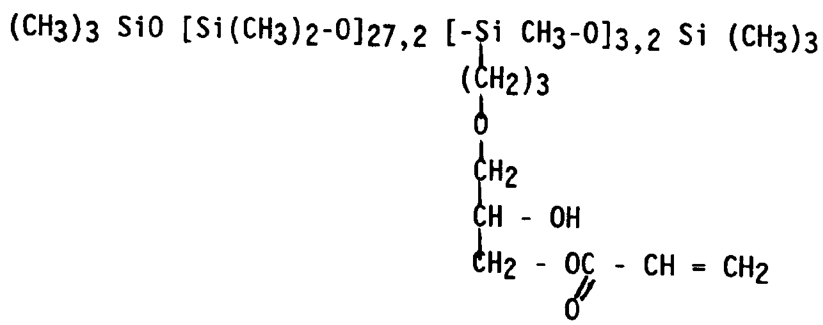

- 0,2 g de peroxyde de lauroyle.

Le milieu est laissé sous agitation jusqu'à complète dissolution. Dans un becher on mélange 80 g d'eau, 2 g de solution aqueuse à 40,7 % en poids de nonylphénol éthoxylé partiellement sulfaté contenant 25 motifs d'oxyde d'éthylène, 3 g d'une solution aqueuse de dodecylbenzenesulfonate de sodium à 20 % en poids, et 60 mg d'acide éthylenediaminotetracetique (E.D.T.A.).

On introduit dans cette solution et sous agitation le mélange monomères acryliques / diorganopolysiloxane. Le mélange obtenu est émulsifié à l'aide d'un homogénéiseur de type ULTRA-TURAX (commercialisé par PROLABO) pendant 5 minutes à 20000 tours/minute.

b) Polymérisation

Dans un ballon d'un litre on introduit :

- 400 g d'eau
- 1 g de solution aqueuse à 40,7 % en poids de nonylphénol éthoxylé partiellement sulfaté à 25 motifs oxyde d'éthylène
- 2 g de solution aqueuse à 20 % en poids de dodecylbenzène sulfonate de sodium
- 40 mg d'E.D.T.A.
- 182,4 g d'une dispersion aqueuse à 26,4 % de GEROL PS 20 (polyester sulfoné hydrodispersable commercialisé par RHONE-POULENC), ce qui correspond à 48 g de produit sec.

Le milieu étant porté à 75°C sous agitation on ajoute 0,8 g de persulfate d'ammonium dissous dans 10 ml d'eau puis on introduit la préémulsion sur 3 heures.

On maintient encore 1 heure à 75°C en fin d'introduction puis on revient à température ambiante.

On obtient un latex à 26 % d'extrait sec rapporté au poids total du latex.

2°) Préparation d'un film polyester composite.

Le latex obtenu précédemment est dilué par addition d'eau distillée pour amener sa concentration en extrait sec à 10 % en poids. On dépose ensuite sur un film polyester biétiré lisse de 30 μm d'épaisseur une couche de latex de 4 μm d'épaisseur au moyen d'un appareil HAND-COATER équipé d'une barre filetée n° 0. Le film enduit est ensuite séché sous tension à 120°C pendant 30 sec. L'épaisseur de l'enduit après séchage est de 0,5 μm.

Le film polyester soumis à l'enduction a été obtenu par extrusion, étirage longitudinal puis transversal puis thermofixation d'un polytéréphtalate d'éthylèneglycol exempt de charge et présentant un indice de viscosité de 650. La rugosité Ra du film support ainsi obtenu est, avant enduction, inférieure à 0,01 μm. Sa rugosité

SRa mesurée comme indiqué ci-avant est de 0,016 µm.

3°) Détermination des propriétés de surface du film composite.

Les coefficients de frottement statique et dynamique film/métal déterminés par la méthode "SHOE-SHINE" décrite ci-avant, ont les valeurs suivantes :

- µs : 0,26
- µd : 0,25

## Revendications

### Revendications pour les Etats contractants suivants : BE, DE, FR, GB, IT, LU, NL

**1.** Films polyester composites à glissant amélioré constitué par un film polyester orienté dont l'une au moins des faces comporte un revêtement destiné à lui conférer un bon glissant caractérisé en ce que ledit revêtement est constitué par au moins un polymère modifié consistant en un polyester greffé comprenant :

a) un tronc dérivé d'un polyester dissipable dans l'eau comportant une pluralité de groupe sulfonyloxy de formule générale :

$$(-SO_3-)_nM \qquad (I)$$

dans laquelle :

. n est égal à 1 ou 2

. M représente un atome d'hydrogène, un métal alcalin ou alcalino-terreux, un cation ammonium, un cation ammonium quaternaire ;

b) des greffons constitués de motifs copolymères dérivés d'au moins un monomère à insaturation éthylénique et d'au moins un organopolysiloxane éthyléniquement insaturé soluble dans ledit ou lesdits monomère(s) à insaturation éthylénique.

**2.** Films polyester composites selon la revendication 1 caractérisés en ce que le polyester dissipable mis en oeuvre est un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique.

**3.** Films polyester composites selon la revendication 2 caractérisés en ce que le nombre de motifs dérivés d'un acide dicarboxylique à groupe sulfonyloxy pour un total de 100 motifs dérivés d'acides dicarboxyliques est de 2 à 30.

**4.** Films polyester composites selon l'une quelconque des revendications 1 à 3 caractérisés en ce que le polyester dissipable est un copolyester comportant une pluralité de motifs dérivés d'au moins un acide dicarboxylique non sulfoné pris dans le groupe des acides téréphtalique, isophtalique et phtalique.

**5.** Films polyester composites selon l'une quelconque des revendications 1 à 4 caractérisés en ce que le polyester dissipable est un copolyester comportant une pluralité de motifs dérivés des acides téré et isophtaliques.

**6.** Films polyester composites selon l'une quelconque des revendications 1 à 5 caractérisés en ce que le polyester dissipable dans l'eau comporte une pluralité de motifs dérivés de l'acide sulfo-5 isophtalique.

**7.** Films polyester composites selon l'une quelconque des revendications 1 à 6 caractérisés en ce que le polyester dissipable comporte une pluralité de motifs dérivés d'au moins un diol aliphatique pris dans le groupe de l'éthylèneglycol et de ses oligomères de formule $HO-(CH_2-CH_2-O-)_n H$ dans laquelle n est un nombre entier de 2 à 10.

**8.** Films polyester composites selon l'une quelconque des revendications 1 à 7 caractérisés en ce que les monomères à insaturation éthylénique constituant une partie des greffons copolymères sont pris dans le groupe formé par les monomères acryliques, les esters vinyliques ou allyliques d'acides carboxyliques aliphatiques ou aromatiques, les composés vinylaromatiques, les halogénures éthyléniques, les acides carboxyliques éthyléniques, les acides sulfoniques éthyléniques.

9. Films polyester composites selon la revendication 8 caractérisés en ce que le monomère de nature acrylique répond à la formule générale :

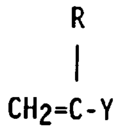

(II)

dans laquelle :
- R représente un atome d'hydrogène ou un groupe alkyle inférieur, éventuellement substitué par un groupe hydroxyle ;
- Y représente un groupe fonctionnel hydroxycarbonyle ; alkoxycarbonyle de formule $-COOR_1$ dans lequel $R_1$ est un radical alkyle comportant de 1 à 20 atomes de carbone, linéaire ou ramifié (éventuellement substitué par un reste hydroxyle); nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone.

10. Films polyester composites selon la revendication 9 caractérisés en ce que le monomère acrylique est pris dans le groupe formé par les acrylate et méthacrylate de méthyle, les acrylate et méthacrylate d'éthyle, l'acrylate de butyle, les acides acrylique et méthacrylique, les acrylamide et méthacrylamide.

11. Films polyester composites selon la revendication 10 caractérisés en ce qu'on associe au moins un monomère réticulant aux monomères à insaturation éthylénique.

12. Films polyester composites selon la revendication 11 caractérisés en ce que la quantité de monomère réticulant représente jusqu'à 5 % en moles du ou des monomères à insaturation éthylénique.

13. Films polyester composites selon la revendication 11 caractérisés en ce que le monomère réticulant est un monomère polyéthylénique.

14. Films polyester composites selon la revendication 11 caractérisés en ce que le monomère réticulant est une hydroxyalkyl (méth) acrylamide.

15. Films polyester composites selon l'une quelconque des revendications 1 à 14 caractérisés en ce que le polymère modifié contient de 0,1 à 15 % en poids d'au moins un agent réticulant externe pris dans le groupe formé par les résines formophénoliques et les résines amines-formol.

16. Films polyester composites selon l'une quelconque des revendications 1 à 15 caractérisés en ce que l'organopolysiloxane dont dérivent les greffons sont représentés par la formule :

$$R''R'RSiO\ (SiRR'''O)_m\ (SiRR''''O)_n\ SiRR'R''$$

formule dans laquelle
. les symboles R sont identiques ou différents et représentent un radical alkyle en $C_1$-$C_4$, phényle, trifluoro-3, 3, 3 propyle
. les symboles R' sont identiques ou différents et représentent R ou un radical vinyle
. les symboles R" sont identiques ou différents et représentent R ou un radical OH
. les symboles R"' sont identiques ou différents et représentent R, un radical vinyle ou un motif -r-X où r représente un radical organique bivalent et X un groupe éthyléniquement insaturé
. les symboles R"" sont identiques ou différents et représentent R"' ou un motif -r'-X' où r' représente un radical organique bivalent et X' un groupe fonctionnel non éthyléniquement insaturé
. au moins 60 % des radicaux représentés par R, R' et R" sont des radicaux méthyles
. les symboles m et n peuvent être nuls séparément, R' et/ou R"" représentant un radical vinyle si m est nul, et ont une valeur suffisante pour assurer une viscosité du polymère de l'ordre de 20 mPas à 10.000.000 mPas à 25°C.

17. Films polyester composites selon l'une quelconque des revendications 1 à 16 caractérisés en ce que, dans le polymère modifié les quantités respectives de tronc et de greffons correspondent à :
- 2 à 60 % en poids par rapport au polymère modifié, de polyester sulfoné dissipable dans l'eau.
- de 0,05 à 30 % en poids par rapport au polymère modifié, d'organopolysiloxane éthyléniquement

insaturé
- et complément à 100 %, de motifs dérivés de monomère(s) à insaturation éthylénique.

**18.** Films polyester composites selon l'une quelconque des revendications 1 à 17 caractérisés en ce que la couche de revêtement en polymère modifié a une épaisseur comprise entre 0,05 et 1 μm.

**19.** Films polyester composites selon l'une quelconque des revendications 1 à 18 caractérisés en ce que le film polyester orienté support est consitué par un polymère comportant au moins 80 % en moles de motifs dérivés d'au moins un acide aromatique dicarboxylique et d'éthylène glycol.

**20.** Films polyester composites selon l'une quelconque des revendications 1 à 19 caractérisés en ce que le film polyester orienté support est constitué par un polymère comportant au moins 80 % en moles de motifs téréphtalate d'éthylèneglycol ou naphtalène-dicarboxylate d'éthylèneglycol.

**21.** Films polyester composites selon l'une quelconque des revendications 1 à 20 caractérisés en ce que le film polyester orienté support à une épaisseur comprise entre 5 et 30 μm.

**22.** Films polyester composites selon l'une quelconque des revendications 1 à 21 caractérisés en ce que le film polyester orienté support à une rugosité Ra inférieure à 0,05 μm.

**23.** Procédé d'obtention de films polyester composites selon l'une quelconque des revendications 1 à 22 caractérisé en ce que l'on procède à l'enduction d'au moins une face d'un film polyester orienté support au moyen d'une composition aqueuse de polymère modifié comme décrit dans les revendications 1 à 17.

**24.** Procédé d'obtention de films composites selon la revendication 23 caractérisé en ce que le polymère modifié est mis en oeuvre sous forme d'une dispersion aqueuse.

**25.** Procédé d'obtention de films composites selon la revendication 23 caractérisé en ce que le polymère modifié est mis en oeuvre sous forme d'une solution aqueuse obtenue par neutralisation à l'aide d'une base alcaline des groupes acides carboxyliques libres présents dans le polymère modifié de la dispersion aqueuse.

**26.** Procédé d'obtention de films composites selon la revendication 24 caractérisé en ce que l'enduction du film polyester orienté support est réalisée avant tout étirage ou entre deux étirages du film support.

**27.** Emploi des films polyester composites selon l'une quelconque des revendications 1 à 22 comme support de revêtements d'enregistrement magnétique.

**28.** Matériau d'enregistrement magnétique constitué par un film support comportant sur au moins une de ses faces un revêtement glissant et un revêtement magnétique, caractérisé en ce que le film support est un film polyester composite selon l'une quelconque des revendications 1 à 22.

**Revendications pour l'Etat contractant suivant : ES**

**1.** Procédé d'obtention de films polyester composites à glissant amélioré constitué par un film polyester orienté dont l'une au moins des faces comporte un revêtement destiné à lui conférer un bon glissant, caractérisé en ce que l'on procède au dépôt sur l'une au moins des faces dudit film d'au moins un polymère modifié consistant en un polyester greffé comprenant :

a) un tronc dérivé d'un polyester dissipable dans l'eau comportant une pluralité de groupe sulfonyloxy de formule générale :

$$(-SO_3-)_nM \qquad (I)$$

dans laquelle :

. n est égal à 1 ou 2

. M représente un atome d'hydrogène, un métal alcalin ou alcalino-terreux, un cation ammonium, un cation ammonium quaternaire ;

b) des greffons constitués de motifs copolymères dérivés d'au moins un monomère à insaturation éthylénique et d'au moins un organopolysiloxane éthyléniquement insaturé soluble dans ledit ou lesdits monomère(s) à insaturation éthylénique.

**2.** Procédé d'obtention de films polyester composites selon la revendication 1, caractérisé en ce que le polyester dissipable mis en oeuvre est un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique.

3. Procédé d'obtention de films polyester composites selon la revendication 2, caractérisé en ce que le nombre de motifs dérivés d'un acide dicarboxylique à groupe sulfonyloxy pour un total de 100 motifs dérivés d'acides dicarboxyliques est de 2 à 30.

4. Procédé d'obtention de films polyester composites selon l'une quelconque des revendications 1 à 3, caractérisé en ce que le polyester dissipable est un copolyester comportant une pluralité de motifs dérivés d'au moins un acide dicarboxylique non sulfoné pris dans le groupe des acides téréphtalique, isophtalique et phtalique.

5. Procédé d'obtention de films polyester composites selon l'une quelconque des revendications 1 à 4, caractérisé en ce que le polyester dissipable est un copolyester comportant une pluralité de motifs dérivés des acides téré et isophtaliques.

6. Procédé d'obtention de films polyester composites selon l'une quelconque des revendications 1 à 5, caractérisé en ce que le polyester dissipable dans l'eau comporte une pluralité de motifs dérivés de l'acide sulfo-5 isophtalique.

7. Procédé d'obtention de films polyester composites selon l'une quelconque des revendications 1 à 6, caractérisé en ce que le polyester dissipable comporte une pluralité de motifs dérivés d'au moins un diol aliphatique pris dans le groupe de l'éthylèneglycol et de ses oligomères de formule $HO-(CH_2-CH_2-O-)_n H$ dans laquelle n est un nombre entier de 2 à 10.

8. Procédé d'obtention de films polyester composites selon l'une quelconque des revendications 1 à 7, caractérisé en ce que les monomères à insaturation éthylénique constituant une partie des greffons copolymères sont pris dans le groupe formé par les monomères acryliques, les esters vinyliques ou allyliques d'acides carboxyliques aliphatiques ou aromatiques, les composés vinylaromatiques, les halogénures éthyléniques, les acides carboxyliques éthyléniques, les acides sulfoniques éthyléniques.

9. Procédé d'obtention de films polyester composites selon la revendication 8, caractérisé en ce que le monomère de nature acrylique répond à la formule générale :

$$CH_2=C(R)-Y \qquad (II)$$

dans laquelle :

- R représente un atome d'hydrogène ou un groupe alkyle inférieur, éventuellement substitué par un groupe hydroxyle ;
- Y représente un groupe fonctionnel hydroxycarbonyle ; alkoxycarbonyle de formule $-COOR_1$ dans lequel $R_1$ est un radical alkyle comportant de 1 à 20 atomes de carbone, linéaire ou ramifié (éventuellement substitué par un reste hydroxyle); nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone.

10. Procédé d'obtention de films polyester composites selon la revendication 9, caractérisé en ce que le monomère acrylique est pris dans le groupe formé par les acrylate et méthacrylate de méthyle, les acrylate et méthacrylate d'éthyle, l'acrylate de butyle, les acides acrylique et méthacrylique, les acrylamide et méthacrylamide.

11. Procédé d'obtention de films polyester composites selon la revendication 10, caractérisé en ce qu'on associe au moins un monomère réticulant aux monomères à insaturation éthylénique.

12. Procédé d'obtention de films polyester composites selon la revendication 11, caractérisé en ce que la quantité de monomère réticulant représente jusqu'à 5 % en moles du ou des monomères à insaturation éthylénique.

13. Procédé d'obtention de films polyester composites selon la revendication 11, caractérisé en ce que le monomère réticulant est un monomère polyéthylénique.

14. Procédé d'obtention de films polyester composites selon la revendication 11, caractérisé en ce que le monomère réticulant est une hydroxyalkyl(méth) acrylamide.

15. Procédé d'obtention de films polyester composites selon l'une quelconque des revendications 1 à 14, caractérisé en ce que le polymère modifié contient de 0,1 à 15 % en poids d'au moins un agent réticulant externe pris dans le groupe formé par les résines formophénoliques et les résines amines-formol.

16. Procédé d'obtention de films polyester composites selon l'une quelconque des revendications 1 à 15, caractérisé en ce que l'organopolysiloxane dont dérivent les greffons sont représentés par la formule :

$$R''R'RSiO\ (SiRR'''O)_m\ (SiRR''''O)_n\ SiRR'R''$$

formule dans laquelle

. les symboles R sont identiques ou différents et représentent un radical alkyle en $C_1$-$C_4$, phényle, trifluoro-3, 3, 3 propyle
. les symboles R' sont identiques ou différents et représentent R ou un radical vinyle
. les symboles R" sont identiques ou différents et représentent R ou un radical OH
. les symboles R"' sont identiques ou différents et représentent R, un radical vinyle ou un motif -r-X où r représente un radical organique bivalent et X un groupe éthyléniquement insaturé
. les symboles R"" sont identiques ou différents et représentent R"' ou un motif -r'-X' où r' représente un radical organique bivalent et X' un groupe fonctionnel non éthyléniquement insaturé
. au moins 60 % des radicaux représentés par R, R' et R" sont des radicaux méthyles
. les symboles m et n peuvent être nuls séparément, R' et/ou R"" représentant un radical vinyle si m est nul, et ont une valeur suffisante pour assurer une viscosité du polymère de l'ordre de 20 mPas à 10.000.000 mPas à 25°C.

17. Procédé d'obtention de films polyester composites selon l'une quelconque des revendications 1 à 16, caractérisé en ce que, dans le polymère modifié les quantités respectives de tronc et de greffons correspondent à :

- 2 à 60 % en poids par rapport au polymère modifié, de polyester sulfoné dissipable dans l'eau.
- de 0,05 à 30 % en poids par rapport au polymère modifié, d'organopolysiloxane éthyléniquement insaturé
- et complément à 100 %, de motifs dérivés de monomère(s) à insaturation éthylénique.

18. Procédé d'obtention de films polyester composites selon l'une quelconque des revendications 1 à 17, caractérisé en ce que la couche de revêtement en polymère modifié a une épaisseur comprise entre 0,05 et 1 µm.

19. Procédé d'obtention de films polyester composites selon l'une quelconque des revendications 1 à 18, caractérisé en ce que le film polyester orienté support est consitué par un polymère comportant au moins 80 % en moles de motifs dérivés d'au moins un acide aromatique dicarboxylique et d'éthylène glycol.

20. Procédé d'obtention de films polyester composites selon l'une quelconque des revendications 1 à 19, caractérisé en ce que le film polyester orienté support est constitué par un polymère comportant au moins 80 % en moles de motifs téréphtalate d'éthylèneglycol ou naphtalène-dicarboxylate d'éthylèneglycol.

21. Procédé d'obtention de films polyester composites selon l'une quelconque des revendications 1 à 20, caractérisé en ce que le film polyester orienté support à une épaisseur comprise entre 5 et 30 µm.

22. Procédé d'obtention de films polyester composites selon l'une quelconque des revendications 1 à 21, caractérisé en ce que le film polyester orienté support à une rugosité Ra inférieure à 0,05 µm.

23. Procédé d'obtention de films polyester composites selon l'une quelconque des revendications 1 à 22, caractérisé en ce que l'on procède à l'enduction d'au moins une face d'un film polyester orienté support au

moyen d'une composition aqueuse de polymère modifié comme décrit dans les revendications 1 à 17.

24. Procédé d'obtention de films composites selon la revendication 23, caractérisé en ce que le polymère modifié est mis en oeuvre sous forme d'une dispersion aqueuse.

25. Procédé d'obtention de films composites selon la revendication 23, caractérisé en ce que le polymère modifié est mis en oeuvre sous forme d'une solution aqueuse obtenue par neutralisation à l'aide d'une base alcaline des groupes acides carboxyliques libres présents dans le polymère modifié de la dispersion aqueuse.

26. Procédé d'obtention de films composites selon la revendication 24, caractérisé en ce que l'enduction du film polyester orienté support est réalisée avant tout étirage ou entre deux étirages du film support.

27. Emploi des films polyester composites selon l'une quelconque des revendications 1 à 22 comme support de revêtements d'enregistrement magnétique.

28. Matériau d'enregistrement magnétique constitué par un film support comportant sur au moins une de ses faces un revêtement glissant et un revêtement magnétique, caractérisé en ce que le film support est un film polyester composite selon l'une quelconque des revendications 1 à 22.

## Claims

### Claims for the following Contracting States : BE, DE, FR,GB, IT, LU, NL

1. Composite polyester films having improved slip, consisting of an orientated polyester film in which at least one of the faces carries a coating intended to confer upon it a good slip, characterised in that the said coating consists of at least one modified polymer consisting of a graft polyester comprising:
   a) a backbone derived from a polyester which can be dissipated in water and contains a plurality of sulphonyloxy groups of general formula:
   $$(-SO_3-)_nM \qquad (I)$$
   in which:
   . n is equal to 1 or 2
   . M represents a hydrogen atom, an alkali metal or alkaline earth metal, an ammonium cation or a quaternary ammonium cation;
   b) grafts consisting of copolymer units derived from at least one ethylenically unsaturated monomer and at least one ethylenically unsaturated organopolysiloxane soluble in the said ethylenically unsaturated monomer or monomers.

2. Composite polyester films according to Claim 1, characterised in that the polyester which can be dissipated which is used is a copolyester containing a plurality of units derived from at least two dicarboxylic acids, one of which contains at least one sulphonyloxy group in its molecule, and a plurality of units derived from at least one aliphatic diol.

3. Composite polyester films according to Claim 2, characterised in that the number of units derived from a dicarboxylic acid containing a sulphonyloxy group is from 2 to 30 for a total of 100 units derived from dicarboxylic acids.

4. Composite polyester films acccording to any one of Claims 1 to 3, characterised in that the polyester which can be dissipated is a copolyester containing a plurality of units derived from at least one non-sulphonated dicarboxylic acid taken from the group comprising terephthalic, isophthalic and phthalic acids.

5. Composite polyester films according to any one of Claims 1 to 4, characterised in that the polyester which can be dissipated is a copolyester containing a plurality of units derived from terephthalic and isophthalic acids.

6. Composite polyester films according to any one of Claims 1 to 5, characterised in that the polyester which can be dissipated in water contains a plurality of units derived from 5-sulphoisophthalic acid.

7. Composite polyester films according to any one of Claims 1 to 6, characterised in that the polyester which can be dissipated contains a plurality of units derived from at least one aliphatic diol taken from the group comprising ethylene glycol and its oligomers of formula $HO-(CH_2-CH_2-O-)_nH$, in which n is an integer from 2 to 10.

8. Composite polyester films according to any one of Claims 1 to 7, characterised in that the ethylenically unsaturated monomers making up part of the copolymer grafts are taken from the group formed by acrylic monomers, vinyl or allyl esters of aliphatic or aromatic carboxylic acids, vinyl-aromatic compounds, ethylenic halides, ethylenic carboxylic acids and ethylenic sulphonic acids.

9. Composite polyester films according to Claim 8, characterised in that the monomer of acrylic nature corresponds to the general formula:

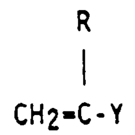

(II)

in which:
- R represents a hydrogen atom or a lower alkyl group, optionally substituted by a hydroxyl group;
- Y represents a hydroxycarbonyl functional group; alkoxycarbonyl of formula $-COOR_1$, in which $R_1$ is a straight-chain or branched alkyl radical containing 1 to 20 carbon atoms (optionally substituted by a hydroxyl radical); nitrile; amide of formula $-CON(R_2,R_3)$, in which $R_2$ and $R_3$, which may be identical or different, represent a hydrogen atom or a straight-chain or branched alkyl radical containing 1 to 20 carbon atoms.

10. Composite polyester films according to Claim 9, characterised in that the acrylic monomer is taken from the group formed by methyl acrylate and methyl methacrylate, ethyl acrylate and ethyl methacrylate, butyl acrylate, acrylic and methacrylic acids, acrylamide and methacrylamide.

11. Composite polyester films according to Claim 10, characterised in that at least one crosslinking monomer is combined with the ethylenically unsaturated monomers.

12. Composite polyester films according to Claim 11, characterised in that the amount of crosslinking monomer represents up to 5 mol% of the ethylenically unsaturated monomer or monomers.

13. Composite polyester films according to Claim 11, characterised in that the crosslinking monomer is a polyethylenic monomer.

14. Composite polyester films according to Claim 11, characterised in that the crosslinking monomer is a hydroxyalkyl(meth)acrylamide.

15. Composite polyester films according to any one of Claims 1 to 14, characterised in that the modified polymer contains 0.1 to 15 % by weight of at least one external crosslinking agent taken from the group formed by the formophenolic resins and the amine-formol resins.

16. Composite polyester films according to any one of Claims 1 to 15, characterised in that the organopolysiloxanes from which the grafts are derived are represented by the formula:

$$R''R'RSiO\ (SiRR'''O)_m\ (SiRR''''O)_n\ SiRR'R''$$

in which formula
. the symbols R are identical or different and represent a $C_1$-$C_4$-alkyl radical, phenyl or 3,3,3-trifluoropropyl,
. the symbols R' are identical or different and represent R or a vinyl radical,
. the symbols R" are identical or different and represent R or an OH radical,
. the symbols R''' are identical or different and represent R, a vinyl radical or a -r-X unit in which r represents a divalent organic radical and X represents an ethylenically unsaturated group,
. the symbols R'''' are identical or different and represent R''' or a -r'-X' unit in which r' represents a

divalent organic radical and X' represents a functional group which is not ethylenically unsaturated,
. at least 60 % of the radicals represented by R, R' and R" are methyl radicals, and
. the symbols m and n can separately be zero, R' and/or R"" representing a vinyl radical if m is zero, and have a value sufficient to ensure a viscosity of the polymer of the order of 20 mPas to 10,000,000 mPas at 25°C.

**17.** Composite polyester films according to any one of Claims 1 to 16, characterised in that the respective amounts of backbone and grafts in the modified polymer correspond to:
- 2 to 60 % by weight relative to the modified polymer, of sulphonated polyester which can be dissipated in water
- 0.05 to 30 % by weight relative to the modified polymer, of ethylenically unsaturated organopolysiloxane
- and, making up to 100 %, units derived from ethylenically unsaturated monomer(s).

**18.** Composite polyester films according to any one of Claims 1 to 17, characterised in that the layer of modified polymer coating has a thickness of between 0.05 and 1 μm.

**19.** Composite polyester films according to any one of Claims 1 to 18, characterised in that the orientated polyester support film consists of a polymer containing at least 80 mol% of units derived from at least one aromatic dicarboxylic acid and ethylene glycol.

**20.** Composite polyester films according to any one of Claims 1 to 19, characterised in that the orientated polyester support film consists of a polymer containing at least 80 mol% of ethylene glycol terephthalate or ethylene glycol naphthalenedicarboxylate units.

**21.** Composite polyester films according to any one of Claims 1 to 20, characterised in that the orientated polyester support film has a thickness of between 5 and 30 μm.

**22.** Composite polyester films according to any one of Claims 1 to 21, characterised in that the orientated polyester support film has a roughness Ra of less than 0.05 μm.

**23.** Process for obtaining composite polyester films according to any one of Claims 1 to 22, characterised in that at least one face of an orientated polyester support film is coated using an aqueous composition of modified polymer as described in Claims 1 to 17.

**24.** Process for obtaining composite films according to Claim 23, characterised in that the modified polymer is used in the form of an aqueous dispersion.

**25.** Process for obtaining composite films according to Claim 23, characterised in that the modified polymer is used in the form of an aqueous solution obtained by neutralisation, with the aid of an alkali metal base, of the free carboxylic acid groups present in the modified polymer in the aqueous dispersion.

**26.** Process for obtaining composite films according to Claim 24, characterised in that the coating of the orientated polyester support film is carried out before any drawing or between two drawings of the support film.

**27.** Use of the composite polyester films according to any one of Claims 1 to 22 as support for magnetic recording coatings.

**28.** Magnetic recording material consisting of a support film carrying on at least one of its faces a slip coating and a magnetic coating, characterised in that the support film is a composite polyester film according to any one of Claims 1 to 22.

**Claims for the following Contracting State : ES**

**1.** Process for obtaining composite polyester films having improved slip, consisting of an orientated polyester film in which at least one of the faces carries a coating intended to confer upon it a good slip, characterised in that the said film has deposited on at least one of its faces at least one modified polymer consisting of a graft polyester comprising:
a) a backbone derived from a polyester which can be dissipated in water and contains a plurality of

sulphonyloxy groups of general formula:

$$(-SO_3-)_nM \qquad (I)$$

in which:

. n is equal to 1 or 2

. M represents a hydrogen atom, an alkali metal or alkaline earth metal, an ammonium cation or a quaternary ammonium cation;

b) grafts consisting of copolymer units derived from at least one ethylenically unsaturated monomer and at least one ethylenically unsaturated organopolysiloxane soluble in the said ethylenically unsaturated monomer or monomers.

2. Process for obtaining composite polyester films according to Claim 1, characterised in that the polyester which can be dissipated which is used is a copolyester containing a plurality of units derived from at least two dicarboxylic acids, one of which contains at least one sulphonyloxy group in its molecule, and a plurality of units derived from at least one aliphatic diol.

3. Process for obtaining composite polyester films according to Claim 2, characterised in that the number of units derived from a dicarboxylic acid containing a sulphonyloxy group is from 2 to 30 for a total of 100 units derived from dicarboxylic acids.

4. Process for obtaining composite polyester films acccording to any one of Claims 1 to 3, characterised in that the polyester which can be dissipated is a copolyester containing a plurality of units derived from at least one non-sulphonated dicarboxylic acid taken from the group comprising terephthalic, isophthalic and phthalic acids.

5. Process for obtaining composite polyester films according to any one of Claims 1 to 4, characterised in that the polyester which can be dissipated is a copolyester containing a plurality of units derived from terephthalic and isophthalic acids.

6. Process for obtaining composite polyester films according to any one of Claims 1 to 5, characterised in that the polyester which can be dissipated in water contains a plurality of units derived from 5-sulphoisophthalic acid.

7. Process for obtaining composite polyester films according to any one of Claims 1 to 6, characterised in that the polyester which can be dissipated contains a plurality of units derived from at least one aliphatic diol taken from the group comprising ethylene glycol and its oligomers of formula $HO-(CH_2-CH_2-O-)_nH$, in which n is an integer from 2 to 10.

8. Process for obtaining composite polyester films according to any one of Claims 1 to 7, characterised in that the ethylenically unsaturated monomers making up part of the copolymer grafts are taken from the group formed by acrylic monomers, vinyl or allyl esters of aliphatic or aromatic carboxylic acids, vinyl-aromatic compounds, ethylenic halides, ethylenic carboxylic acids and ethylenic sulphonic acids.

9. Process for obtaining composite polyester films according to Claim 8, characterised in that the monomer of acrylic nature corresponds to the general formula:

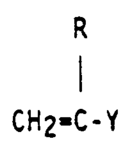

(II)

in which:

- R represents a hydrogen atom or a lower alkyl group, optionally substituted by a hydroxyl group;
- Y represents a hydroxycarbonyl functional group; alkoxycarbonyl of formula $-COOR_1$, in which $R_1$ is a straight-chain or branched alkyl radical containing 1 to 20 carbon atoms (optionally substituted by a hydroxyl radical); nitrile; amide of formula $-CON(R_2,R_3)$, in which $R_2$ and $R_3$, which may be identical or different, represent a hydrogen atom or a straight-chain or branched alkyl radical containing 1 to 20 carbon atoms.

10. Process for obtaining composite polyester films according to Claim 9, characterised in that the acrylic monomer is taken from the group formed by methyl acrylate and methyl methacrylate, ethyl acrylate and ethyl methacrylate, butyl acrylate, acrylic and methacrylic acids, acrylamide and methacrylamide.

11. Process for obtaining composite polyester films according to Claim 10, characterised in that at least one crosslinking monomer is combined with the ethylenically unsaturated monomers.

12. Process for obtaining composite polyester films according to Claim 11, characterised in that the amount of crosslinking monomer represents up to 5 mol% of the ethylenically unsaturated monomer or monomers.

13. Process for obtaining composite polyester films according to Claim 11, characterised in that the crosslinking monomer is a polyethylenic monomer.

14. Process for obtaining composite polyester films according to Claim 11, characterised in that the crosslinking monomer is a hydroxyalkyl(meth)acrylamide.

15. Process for obtaining composite polyester films according to any one of Claims 1 to 14, characterised in that the modified polymer contains 0.1 to 15 % by weight of at least one external crosslinking agent taken from the group formed by the formophenolic resins and the amine-formol resins.

16. Process for obtaining composite polyester films according to any one of Claims 1 to 15, characterised in that the organopolysiloxanes from which the grafts are derived are represented by the formula:

$$R''R'RSiO\ (SiRR'''O)_m\ (SiRR''''O)_n\ SiRR'R''$$

in which formula

. the symbols R are identical or different and represent a $C_1$-$C_4$-alkyl radical, phenyl or 3,3,3-trifluoropropyl,
. the symbols R' are identical or different and represent R or a vinyl radical,
. the symbols R" are identical or different and represent R or an OH radical,
. the symbols R"' are identical or different and represent R, a vinyl radical or a -r-X unit in which r represents a divalent organic radical and X represents an ethylenically unsaturated group,
. the symbols R"" are identical or different and represent R"' or a -r'-X' unit in which r' represents a divalent organic radical and X' represents a functional group which is not ethylenically unsaturated,
. at least 60 % of the radicals represented by R, R' and R" are methyl radicals, and
. the symbols m and n can separately be zero, R' and/or R"" representing a vinyl radical if m is zero, and have a value sufficient to ensure a viscosity of the polymer of the order of 20 mPas to 10,000,000 mPas at 25°C.

17. Process for obtaining composite polyester films according to any one of Claims 1 to 16, characterised in that the respective amounts of backbone and grafts in the modified polymer correspond to:

- 2 to 60 % by weight relative to the modified polymer, of sulphonated polyester which can be dissipated in water
- 0.05 to 30 % by weight relative to the modified polymer, of ethylenically unsaturated organopolysiloxane
- and, making up to 100 %, units derived from ethylenically unsaturated monomer(s).

18. Composite polyester films according to any one of Claims 1 to 17, characterised in that the layer of modified polymer coating has a thickness of between 0.05 and 1 μm.

19. Composite polyester films according to any one of Claims 1 to 18, characterised in that the orientated polyester support film consists of a polymer containing at least 80 mol% of units derived from at least one aromatic dicarboxylic acid and ethylene glycol.

20. Composite polyester films according to any one of Claims 1 to 19, characterised in that the orientated polyester support film consists of a polymer containing at least 80 mol% of ethylene glycol terephthalate or ethylene glycol naphthalenedicarboxylate units.

21. Process for obtaining composite polyester films according to any one of Claims 1 to 20, characterised in that the orientated polyester support film has a thickness of between 5 and 30 μm.

22. Process for obtaining composite polyester films according to any one of Claims 1 to 21, characterised in

that the orientated polyester support film has a roughness Ra of less than 0.05 µm.

23. Process for obtaining composite polyester films according to any one of Claims 1 to 22, characterised in that at least one face of an orientated polyester support film is coated using an aqueous composition of modified polymer as described in Claims 1 to 17.

24. Process for obtaining composite films according to Claim 23, characterised in that the modified polymer is used in the form of an aqueous dispersion.

25. Process for obtaining composite films according to Claim 23, characterised in that the modified polymer is used in the form of an aqueous solution obtained by neutralization, with the aid of an alkali metal base, of the free carboxylic acid groups present in the modified polymer in the aqueous dispersion.

26. Process for obtaining composite films according to Claim 24, characterised in that the coating of the orientated polyester support film is carried out before any drawing or between two drawings of the support film.

27. Use of the composite polyester films according to any one of Claims 1 to 22 as support for magnetic recording coatings.

28. Magnetic recording material consisting of a support film carrying on at least one of its faces a slip coating and a magnetic coating, characterised in that the support film is a composite polyester film according to any one of Claims 1 to 22.

## Patentansprüche

### Patentansprüche für folgende Vertragsstaaten : BE, DE, FR, GB, IT, LU, NL

1. Polyesterverbundfilme mit verbesserter Gleitfähigkeit, die aus einem orientierten Polyesterfilm aufgebaut sind, wobei mindestens eine Seite desselben einen Überzug umfaßt, der dazu bestimmt ist, diesem eine gute Gleitfähigkeit zu verleihen, dadurch gekennzeichnet, daß besagter Überzug aus mindestens einem modifizierten Polymer aufgebaut ist, welches aus einem gepfropften Polyester besteht, der umfaßt:
   a) eine Stammkette, die von einem in Wasser verteilbaren Polyester abgeleitet ist, welche eine Mehrzahl von Sulfonyloxy-Gruppen der allgemeinen Formel:
   $$(-SO_3-)_n\ M \qquad (I)$$
   umfaßt, in der:
   - n gleich 1 oder 2 ist,
   - M ein Wasserstoffatom, ein Alkali- oder Erdalkalimetall, ein Ammoniumkation, ein quaternäres Ammoniumkation darstellt,

   b) Pfropfteile, die aus Copolymereinheiten aufgebaut sind, welche von mindestens einem Monomeren mit ethylenischer Unsättigung und von mindestens einem ethylenisch ungesättigten Organopolysiloxan, das in dem oder den Monomeren mit ethylenischer Unsättigung löslich ist, abgeleitet sind.

2. Polyesterverbundfilme nach Anspruch 1, dadurch gekennzeichnet, daß der verwendete verteilbare Polyester ein Copolyester ist, der eine Mehrzahl von Einheiten, welche von mindestens zwei Dicarbonsäuren abgeleitet sind, von denen eine mindestens eine Sulfonyloxy-Gruppe in ihrem Molekül umfaßt, und eine Mehrzahl von Einheiten, die von mindestens einem aliphatischen Diol abgeleitet sind, umfaßt.

3. Polyesterverbundfilme nach Anspruch 2, dadurch gekennzeichnet, daß die Zahl der von einer Dicarbonsäure mit Sulfonyloxy-Gruppe abgeleiteten Einheiten pro insgesamt 100 von Dicarbonsäuren abgeleiteten Einheiten 2 bis 30 beträgt.

4. Polyesterverbundfilme nach irgendeinem der Ansprüche 1 bis 3, dadurch gekennzeichnet, daß der verteilbare Polyester ein Copolyester ist, der eine Mehrzahl von Einheiten umfaßt, die von mindestens einer nicht- sulfonierten Dicarbonsäure, ausgewählt aus der Gruppe von Terephthal-, Isophthal- und Phthalsäure, abgeleitet sind.

5. Polyesterverbundfilme nach irgendeinem der Ansprüche 1 bis 4, dadurch gekennzeichnet, daß der verteilbare Polyester ein Copolyester ist, der eine Mehrzahl von Einheiten umfaßt, die von Tere- und Isophthalsäure abgeleitet sind.

6. Polyesterverbundfilme nach irgendeinem der Ansprüche 1 bis 5, dadurch gekennzeichnet, daß der in Wasser verteilbare Polyester eine Mehrzahl von Einheiten, die von 5-Sulfo- isophthalsäure abgeleitet sind, umfaßt.

7. Polyesterverbundfilme nach irgendeinem der Ansprüche 1 bis 6, dadurch gekennzeichnet, daß der verteilbare Polyester eine Mehrzahl von Einheiten umfaßt, die von mindestens einem aliphatischen Diol, ausgewählt aus der Gruppe von Ethylenglykol und seinen Oligomeren der Formel $HO-(CH_2-CH_2-O-)_nH$, in der n eine ganze Zahl von 2 bis 10 ist, abgeleitet sind.

8. Polyesterverbundfilme nach irgendeinem der Ansprüche 1 bis 7, dadurch gekennzeichnet, daß die Monomeren mit ethylenischer Unsättigung, die einen Teil der copolymeren Pfropfteile ausmachen, aus der Gruppe ausgewählt sind, die von Acrylmonomeren, Vinyl- oder Allylestern von aliphatischen oder aromatischen Carbonsäuren, vinylaromatischen Verbindungen, ethylenischen Halogeniden, ethylenischen Carbonsäuren, ethylenischen Sulfonsäuren gebildet wird.

9. Polyesterverbundfilme nach Anspruch 8, dadurch gekennzeichnet, daß das Monomer mit acrylischer Natur der allgemeinen Formel:

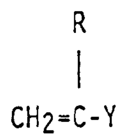

(II)

entspricht, in der:

- R ein Wasserstoffatom oder eine Niederalkylgruppe, die gegebenenfalls durch eine Hydroxylgruppe substituiert ist, darstellt,
- Y eine funktionelle Hydroxycarbonylgruppe; Alkoxycarbonylgruppe der Formel $-COOR_1$, in der $R_1$ ein linearer oder verzweigter Alkylrest mit 1 bis 20 Kohlenstoffatomen (gegebenenfalls durch einen Hydroxylrest substituiert) ist; Nitrilgruppe; Amidgruppe der Formel $-CON(R_2,R_3)$, in der $R_2$ und $R_3$, identisch oder verschieden, für ein Wasserstoffatom oder einen linearen oder verzweigten Alkylrest mit 1 bis 20 Kohlenstoffatomen stehen, darstellt.

10. Polyesterverbundfilme nach Anspruch 9, dadurch gekennzeichnet, daß das acrylische Monomer aus der von Methylacrylat und -methacrylat, Ethylacrylat und -methacrylat, Butylacrylat, Acryl- und Methacrylsäure, Acrylamid und Methacrylamid gebildeten Gruppe ausgewählt ist.

11. Polyesterverbundfilme nach Anspruch 10, dadurch gekennzeichnet, daß man mindestens ein vernetzendes Monomer zu den Monomeren mit ethylenischer Unsättigung hinzufügt.

12. Polyesterverbundfilme nach Anspruch 11, dadurch gekennzeichnet, daß die Menge des vernetzenden Monomers bis zu 5 Mol-% des oder der Monomeren mit ethylenischer Unsättigung beträgt.

13. Polyesterverbundfilme nach Anspruch 11, dadurch gekennzeichnet, daß das vernetzende Monomer ein polyethylenisches Monomer ist.

14. Polyesterverbundfilme nach Anspruch 11, dadurch gekennzeichnet, daß das vernetzende Monomer ein Hydroxyalkyl(meth)acrylamid ist.

15. Polyesterverbundfilme nach irgendeinem der Ansprüche 1 bis 14, dadurch gekennzeichnet, daß das modifizierte Polymer 0,1 bis 15 Gew.-% von mindestens einem externen Vernetzungsmittel, ausgewählt aus der Gruppe, die von den Formophenol-Harzen und den Amin-Formol-Harzen gebildet wird, enthält.

16. Polyesterverbundfilme nach irgendeinem der Ansprüche 1 bis 15, dadurch gekennzeichnet, daß das Organopolysiloxan, von dem die Pfropfteile abstammen, durch die Formel:

$$R''R'RSiO(SiRR'''O)_m(SiRR''''O)_nSiRR'R''$$

dargestellt wird, in der

- die Symbole R identisch oder verschieden sind und einen $C_1$-$C_4$-Alkyl-, Phenyl-, 3,3,3-Trifluorpropylrest darstellen,
- die Symbole R' identisch oder verschieden sind und R oder einen Vinylrest darstellen,
- die Symbole R" identisch oder verschieden sind und R oder einen OH-Rest darstellen,
- die Symbole R'" identisch oder verschieden sind und R, einen Vinylrest oder eine Einheit -r-X-, worin r für einen zweiwertigen organischen Rest und X für eine ethylenisch ungesättigte Gruppe steht, darstellen,
- die Symbole R "" identisch oder verschieden sind und R'" oder eine Einheit -r'-X', worin r' für einen zweiwertigen organischen Rest und X' für eine nicht ethylenisch ungesättige funktionelle Gruppe steht, darstellen,
- mindestens 60% der Reste, die von R, R' und R" dargestellt werden, Methylreste sind,
- die Symbole m und n unabhängig Null sein können, wobei R' und/oder R"" einen Vinylrest darstellen, wenn m Null ist, und einen Wert aufweisen, der ausreicht, um eine Viskosität des Polymeren in der Größenordnung von 20 mPas bis 10 000 000 mPas bei 25°C sicherzustellen.

**17.** Polyesterverbundfilme nach irgendeinem der Ansprüche 1 bis 16, dadurch gekennzeichnet, daß in dem modifizierten Polymer die jeweiligen Mengen der Stammkette und der Pfropfteile entsprechen:

- 2 bis 60 Gew. -%, bezogen auf das modifizierte Polymer, in Wasser verteilbarer sulfonierter Polyester,
- 0,05 bis 30 Gew.-%, bezogen auf das modifizierte Polymer, ethylenisch ungesättigtes Organopolysiloxan
- und, ergänzend auf 100%, Einheiten, die von Monomer(en) mit ethylenischer Unsättigung abgeleitet sind.

**18.** Polyesterverbundfilme nach irgendeinem der Ansprüche 1 bis 17, dadurch gekennzeichnet, daß die Überzugsschicht aus modifiziertem Polymer eine Dicke, die zwischen 0,05 und 1 µm eingeschlossen ist, aufweist.

**19.** Polyesterverbundfilme nach irgendeinem der Ansprüche 1 bis 18, dadurch gekennzeichnet, daß der orientierte Polyesterfilmträger aus einem Polymer, welches mindestens 80 Mol-% Einheiten umfaßt, die von mindestens einer aromatischen Dicarbonsäure und von Ethylenglykol abgeleitet sind, aufgebaut ist.

**20.** Polyesterverbundfilme nach irgendeinem der Ansprüche 1 bis 19, dadurch gekennzeichnet, daß der orientierte Polyesterfilmträger aus einem Polymer aufgebaut ist, welches mindestens 80 Mol-% Ethylenglykolterephthalat- oder Ethylenglykolnaphthalindicarboxylat-Einheiten umfaßt.

**21.** Polyesterverbundfilme nach irgendeinem der Ansprüche 1 bis 20, dadurch gekennzeichnet, daß der orientierte Polyesterfilmträger eine Dicke, die zwischen 5 und 30 µm eingeschlossen ist, aufweist.

**22.** Polyesterverbundfilme nach irgendeinem der Ansprüche 1 bis 21, dadurch gekennzeichnet, daß der orientierte Polyesterfilmträger eine Rauhheit Ra unterhalb von 0,05 µm aufweist.

**23.** Verfahren zur Herstellung von Polyesterverbundfilmen nach irgendeinem der Ansprüche 1 bis 22, dadurch gekennzeichnet, daß man mindestens eine Seite eines orientierten Polyesterfilmträgers mittels einer wäßrigen Zusammensetzung von modifiziertem Polymer, wie in den Ansprüchen 1 bis 17 beschrieben, beschichtet.

**24.** Verfahren zur Herstellung von Verbundfilmen nach Anspruch 23, dadurch gekennzeichnet, daß das modifizierte Polymer in Form einer wäßrigen Dispersion verwendet wird.

**25.** Verfahren zur Herstellung von Verbundfilmen nach Anspruch 23, dadurch gekennzeichnet, daß das modifizierte Polymer in Form einer wäßrigen Lösung, erhalten durch Neutralisieren von in dem modifizierten Polymer der wäßrigen Dispersion anwesenden freien Carbonsäure-Gruppen mit Hilfe einer alkalischen Base, verwendet wird.

**26.** Verfahren zur Herstellung von Verbundfilmen nach Anspruch 24, dadurch gekennzeichnet, daß die Beschichtung des orientierten Polyesterfilmträgers vor jeglichem Strecken oder zwischen zwei Streckvorgängen des Filmträgers durchgeführt wird.

27. Verwendung von Polyesterverbundfilmen nach irgendeinem der Ansprüche 1 bis 22 als Träger von magnetischen Aufzeichnungsschichten.

28. Magnetisches Aufzeichnungsmaterial, aufgebaut aus einem Filmträger, der auf mindestens einer seiner Seiten einen gleitfähigen Überzug und einen magnetischen Überzug umfaßt, dadurch gekennzeichnet, daß der Filmträger ein Polyesterverbundfilm nach irgendeinem der Ansprüche 1 bis 22 ist.

**Patentansprüche für folgenden Vertragsstaat : ES**

1. Verfahren zur Herstellung von Polyesterverbundfilmen mit verbesserter Gleitfähigkeit, die aus einem orientierten Polyesterfilm aufgebaut sind, wobei mindestens eine Seite desselben einen Überzug umfaßt, der dazu bestimmt ist, diesem eine gute Gleitfähigkeit zu verleihen, dadurch gekennzeichnet, daß man auf mindestens einer der Seiten des besagten Films mindestens ein modifiziertes Polymer abscheidet, welches aus einem gepfropften Polyester besteht, der umfaßt:

   a) eine Stammkette, die von einem in Wasser verteilbaren Polyester abgeleitet ist, welche eine Mehrzahl von Sulfonyloxy-Gruppen der allgemeinen Formel:

   $$(-SO_3-)_n\ M \qquad (I)$$

   umfaßt, in der:

   - n gleich 1 oder 2 ist,
   - M ein Wasserstoffatom, ein Alkali- oder Erdalkalimetall, ein Ammoniumkation, ein quaternäres Ammoniumkation darstellt,

   b) Pfropfteile, die aus Copolymereinheiten aufgebaut sind, welche von mindestens einem Monomeren mit ethylenischer Unsättigung und von mindestens einem ethylenisch ungesättigten Organopolysiloxan, das in dem oder den Monomeren mit ethylenischer Unsättigung löslich ist, abgeleitet sind.

2. Verfahren zur Herstellung von Polyesterverbundfilmen nach Anspruch 1, dadurch gekennzeichnet, daß der verwendete verteilbare Polyester ein Copolyester ist, der eine Mehrzahl von Einheiten, welche von mindestens zwei Dicarbonsäuren abgeleitet sind, von denen eine mindestens eine Sulfonyloxy-Gruppe in ihrem Molekül umfaßt, und eine Mehrzahl von Einheiten, die von mindestens einem aliphatischen Diol abgeleitet sind, umfaßt.

3. Verfahren zur Herstellung von Polyesterverbundfilmen nach Anspruch 2, dadurch gekennzeichnet, daß die Zahl der von einer Dicarbonsäure mit Sulfonyloxy-Gruppe abgeleiteten Einheiten pro insgesamt 100 von Dicarbonsäuren abgeleiteten Einheiten 2 bis 30 beträgt.

4. Verfahren zur Herstellung von Polyesterverbundfilmen nach irgendeinem der Ansprüche 1 bis 3, dadurch gekennzeichnet, daß der verteilbare Polyester ein Copolyester ist, der eine Mehrzahl von Einheiten umfaßt, die von mindestens einer nicht-sulfonierten Dicarbonsäure, ausgewählt aus der Gruppe von Terephthal-, Isophthal- und Phthalsäure, abgeleitet sind.

5. Verfahren zur Herstellung von Polyesterverbundfilmen nach irgendeinem der Ansprüche 1 bis 4, dadurch gekennzeichnet, daß der verteilbare Polyester ein Copolyester ist, der eine Mehrzahl von Einheiten umfaßt, die von Tere- und Isophthalsäure abgeleitet sind.

6. Verfahren zur Herstellung von Polyesterverbundfilmen nach irgendeinem der Ansprüche 1 bis 5, dadurch gekennzeichnet, daß der in Wasser verteilbare Polyester eine Mehrzahl von Einheiten, die von 5-Sulfoisophthalsäure abgeleitet sind, umfaßt.

7. Verfahren zur Herstellung von Polyesterverbundfilmen nach irgendeinem der Ansprüche 1 bis 6, dadurch gekennzeichnet, daß der verteilbare Polyester eine Mehrzahl von Einheiten umfaßt, die von mindestens einem aliphatischen Diol, ausgewählt aus der Gruppe von Ethylenglykol und seinen Oligomeren der Formel $HO-(CH_2-CH_2-O-)_nH$, in der n eine ganze Zahl von 2 bis 10 ist, abgeleitet sind.

8. Verfahren zur Herstellung vor Polyesterverbundfilmen nach irgendeinem der Ansprüche 1 bis 7, dadurch gekennzeichnet, daß die Monomeren mit ethylenischer Unsättigung, die einen Teil der copolymeren Pfropfteile ausmachen, aus der Gruppe ausgewählt sind, die von Acrylmonomeren, Vinyl- oder Allylestern von aliphatischen oder aromatischen Carbonsäuren, vinylaromatischen Verbindungen, ethylenischen Halogeniden, ethylenischen Carbonsäuren, ethylenischen Sulfonsäuren gebildet wird.

**9.** Verfahren zur Herstellung von Polyesterverbundfilmen nach Anspruch 8, dadurch gekennzeichnet, daß das Monomer mit acrylischer Natur der allgemeinen Formel:

R
|
$CH_2$=C-Y (II)

entspricht, in der:

- R ein Wasserstoffatom oder eine Niederalkylgruppe, die gegebenenfalls durch eine Hydroxylgruppe substituiert ist, darstellt,
- Y eine funktionelle Hydroxycarbonylgruppe; Alkoxycarbonylgruppe der Formel -$COOR_1$, in der $R_1$ ein linearer oder verzweigter Alkylrest mit 1 bis 20 Kohlenstoffatomen (gegebenenfalls durch einen Hydroxylrest substituiert) ist; Nitrilgruppe; Amidgruppe der Formel -$CON(R_2,R_3)$, in der $R_2$ und $R_3$, gleich oder verschieden, für ein Wasserstoffatom oder einen linearen oder verzweigten Alkylrest mit 1 bis 20 Kohlenstoffatomen stehen, darstellt.

**10.** Verfahren zur Herstellung von Polyesterverbundfilmen nach Anspruch 9, dadurch gekennzeichnet, daß das acrylische Monomer aus der von Methylacrylat und -methacrylat, Ethylacrylat und -methacrylat, Butylacrylat, Acryl- und Methacrylsäure, Acrylamid und Methacrylamid gebildeten Gruppe ausgewählt ist.

**11.** Verfahren zur Herstellung von Polyesterverbundfilmen nach Anspruch 10, dadurch gekennzeichnet, daß man mindestens ein vernetzendes Monomer zu den Monomeren mit ethylenischer Unsättigung hinzufügt.

**12.** Verfahren zur Herstellung von Polyesterverbundfilmen nach Anspruch 11, dadurch gekennzeichnet, daß die Menge des vernetzenden Monomers bis zu 5 Mol-% des oder der Monomeren mit ethylenischer Unsättigung beträgt.

**13.** Verfahren zur Herstellung von Polyesterverbundfilmen nach Anspruch 11, dadurch gekennzeichnet, daß das vernetzende Monomer ein polyethylenisches Monomer ist.

**14.** Verfahren zur Herstellung von Polyesterverbundfilmen nach Anspruch 11, dadurch gekennzeichnet, daß das vernetzende Monomer ein Hydroxyalkyl(meth)acrylamid ist.

**15.** Verfahren zur Herstellung von Polyesterverbundfilmen nach irgendeinem der Ansprüche 1 bis 14, dadurch gekennzeichnet, daß das modifizierte Polymer 0,1 bis 15 Gew.-% von mindestens einem externen Vernetzungsmittel, ausgewählt aus der Gruppe, die von den Form ophenol-Harzen und den Amin-Formol-Harzen gebildet wird, enthält.

**16.** Verfahren zur Herstellung von Polyesterverbundfilmen nach irgendeinem der Ansprüche 1 bis 15, dadurch gekennzeichnet, daß das Organopolysiloxan, von dem die Pfropfteile abstammen, durch die Formel:

$$R''R'RSiO(SiRR'''O)_m(SiRR''''O)_nSiRR'R''$$

dargestellt wird, in der

- die Symbole R identisch oder verschieden sind und einen $C_1$-$C_4$-Alkyl-, Phenyl-, 3,3,3-Trifluorpropylrest darstellen,
- die Symbole R' identisch oder verschieden sind und R oder einen Vinylrest darstellen,
- die Symbole R" identisch oder verschieden sind und R oder einen OH-Rest darstellen,
- die Symbole R'" identisch oder verschieden sind und R, einen Vinylrest oder eine Einheit -r-X-, worin r für einen zweiwertigen organischen Rest und X für eine ethylenisch ungesättigte Gruppe steht, darstellen,
- die Symbole R "" identisch oder verschieden sind und R'" oder eine Einheit -r'-X', worin r' für einen zweiwertigen organischen Rest und X' für eine nicht ethylenisch ungesättige funktionelle Gruppe steht, darstellen,
- mindestens 60% der Reste, die von R, R' und R" dargestellt werden, Methylreste sind,
- die Symbole m und n unabhängig Null sein können, wobei R' und/oder R"" einen Vinylrest darstellen, wenn m Null ist, und einen Wert aufweisen, der ausreicht, um eine Viskosität des Polymeren in der Größenordnung von 20 mPas bis 10 000 000 mPas bei 25°C sicherzustellen.

17. Verfahren zur Herstellung von Polyesterverbundfilmen nach irgendeinem der Ansprüche 1 bis 16, dadurch gekennzeichnet, daß in dem modifizierten Polymer die jeweiligen Mengen der Stammkette und der Pfropfteile entsprechen:
    - 2 bis 60 Gew.-%, bezogen auf das modifizierte Polymer, in Wasser verteilbarer sulfonierter Polyester,
    - 0,05 bis 30 Gew.-%, bezogen auf das modifizierte Polymer, ethylenisch ungesättigtes Organopolysiloxan
    - und, ergänzend auf 100%, Einheiten, die von Monomer(en) mit ethylenischer Unsättigung abgeleitet sind.

18. Verfahren zur Herstellung von Polyesterverbundfilmen nach irgendeinem der Ansprüche 1 bis 17, dadurch gekennzeichnet, daß die Überzugsschicht aus modifiziertem Polymer eine Dicke, die zwischen 0,05 und 1 μm eingeschlossen ist, aufweist.

19. Verfahren zur Herstellung von Polyesterverbundfilmen nach irgendeinem der Ansprüche 1 bis 18, dadurch gekennzeichnet, daß der orientierte Polyesterfilmträger aus einem Polymer, welches mindestens 80 Mol-% Einheiten umfaßt, die von mindestens einer aromatischen Dicarbonsäure und von Ethylenglykol abgeleitet sind, aufgebaut ist.

20. Verfahren zur Herstellung von Polyesterverbundfilmen nach irgendeinem der Ansprüche 1 bis 19, dadurch gekennzeichnet, daß der orientierte Polyesterfilmträger aus einem Polymer aufgebaut ist, welches mindestens 80 Mol-% Ethylenglykolterephthalat- oder Ethylenglykolnaphthalindicarboxylat-Einheiten umfaßt.

21. Verfahren zur Herstellung von Polyesterverbundfilmen nach irgendeinem der Ansprüche 1 bis 20, dadurch gekennzeichnet, daß der orientierte Polyesterfilmträger eine Dicke, die zwischen 5 und 30 μm eingeschlossen ist, aufweist.

22. Verfahren zur Herstellung von Polyesterverbundfilmen nach irgendeinem der Ansprüche 1 bis 21, dadurch gekennzeichnet, daß der orientierte Polyesterfilmträger eine Rauhheit Ra unterhalb von 0,05 μm aufweist.

23. Verfahren zur Herstellung von Polyesterverbundfilmen nach irgendeinem der Ansprüche 1 bis 22, dadurch gekennzeichnet, daß man mindestens eine Seite eines orientierten Polyesterfilmträgers mittels einer wäßrigen Zusammensetzung von modifiziertem Polymer, wie in den Ansprüchen 1 bis 17 beschrieben, beschichtet.

24. Verfahren zur Herstellung von Verbundfilmen nach Anspruch 23, dadurch gekennzeichnet, daß das modifizierte Polymer in Form einer wäßrigen Dispersion verwendet wird.

25. Verfahren zur Herstellung von Verbundfilmen nach Anspruch 23, dadurch gekennzeichnet, daß das modifizierte Polymer in Form einer wäßrigen Lösung, erhalten durch Neutralisieren von in dem modifizierten Polymer der wäßrigen Dispersion anwesenden freien Carbonsäure-Gruppen mit Hilfe einer alkalischen Base, verwendet wird.

26. Verfahren zur Herstellung von Verbundfilmen nach Anspruch 24, dadurch gekennzeichnet, daß die Beschichtung des orientierten Polyesterfilmträgers vor jeglichem Strecken oder zwischen zwei Streckvorgängen des Filmträgers durchgeführt wird.

27. Verwendung von Polyesterverbundfilmen nach irgendeinem der Ansprüche 1 bis 22 als Träger von magnetischen Aufzeichnungsschichten.

28. Magnetisches Aufzeichnungsmaterial, aufgebaut aus einem Filmträger, der auf mindestens einer seiner Seiten einen gleitfähigen Überzug und einen magnetischen Überzug umfaßt, dadurch gekennzeichnet, daß der Filmträger ein Polyesterverbundfilm nach irgendeinem der Ansprüche 1 bis 22 ist.